# EUROPEAN PATENT APPLICATION

(11) **EP 4 682 704 A1**
(43) Date of publication of application: **21.01.2026**
(21) Application number: 25189843.3
(22) Date of filing: 16.07.2025
(51) Int. Cl.: G06F 3/12, G06F 1/26, G03G 15/00, H02J 1/10, H02M 3/158

(54) **PRINTER**

(30) Priority: 19.07.2024 JP 2024115483; 22.05.2025 JP 2025085442
(71) Applicant: BROTHER KOGYO KABUSHIKI KAISHA, Aichi-ken 467-8561 (JP)
(72) Inventor: YAMAGUCHI, Ryoji, Nagoya-shi, Aichi, 467-8562 (JP)
(74) Representative: Kuhnen & Wacker Patent- und Rechtsanwaltsbüro PartG mbB

(57) **Abstract**

A printer 1A includes a first USB port 11, a second USB port 12, a functional portion 60, a first supply circuit 70, and a voltage difference adjustment portion 40A. The first USB port 11 receives a first power 190 from a first power supply 101. The second USB port 12 receives a second power 290 from a second power supply 201. The functional portion 60 executes a function of the printer 1A. The first supply circuit 70 connects the first USB port 11 and the second USB port 12 in parallel to the functional portion 60. The voltage difference adjustment portion 40A adjusts the voltage difference between the voltage of the first power 190 and the voltage of the second power 290.

## Description

### BACKGROUND ART

The image processing apparatus described in Japanese Laid-Open Patent Publication No. 2019-133660 includes a first USB connector and a second USB connector that establish connections compliant with Universal Serial Bus Power Delivery (USB PD) standards. The first USB connector connects to a first external device and receives power from the first external device. The second USB connector connects to a second external device and receives power from the second external device. The image processing device receives power via either the first USB connector or the second USB connector, and executes various functions of the image processing device. "USB" and "USB PD" are registered trademarks of USB Implementers Forum, Inc.

The above-described image processing device switches from receiving power through the first USB connector to receiving power through the second USB connector when the power received through the first USB connector is insufficient to perform the required functions. However, power supply may be momentarily interrupted during the switch from receiving power via the first USB connector to receiving power via the second USB connector. At this time, the image processing device may not be able to execute functions stably.

### SUMMARY

An object of the present invention is to provide a printer that can perform its functions stably.

The printer according to the present invention includes a first power receiving portion, a second power receiving portion, a functional portion, a first supply circuit, and a voltage difference adjustment portion. The first power receiving portion is configured to receive a first power from a first power supply. The second power receiving portion is configured to receive a second power from a second power supply. The functional portion is configured to execute a printer function of the printer. The first supply circuit is configured to connect the first power receiving portion and the second power receiving portion in parallel to the functional portion. The voltage difference adjustment portion is configured to adjust the voltage difference between the voltage of the first power supply and the voltage of the second power supply in the first supply circuit.

According to the present invention, the first supply circuit connects the first power receiving portion and the second power receiving portion to the functional portion in parallel. In the functional portion, the first power and the second power are supplied in parallel. Here, when the first supply circuit supplies the first power and the second power in parallel to the functional portion, a voltage difference between the voltage of the first power and the voltage of the second power may occur in the first supply circuit. Because the voltage difference adjustment portion of the printer adjusts the voltage difference in the first supply circuit, the first power supply and the second power supply do not backflow in the first supply circuit. Therefore, the printer can supply both the first power and the second power in parallel to the functional portion, so even when the connection with one of the first power supply or the second power supply is momentarily interrupted, the printer can execute its functions stably with the power received from the other of the first power supply or the second power supply.

In the present invention, the first receiving portion may be a first USB port configured to receive the first power from the first power supply through a connection compliant with Universal Serial Bus (USB) standards, and the second receiving portion may be a second USB port configured to receive the second power from the second power supply through a connection compliant with the USB standards. Accordingly, even when the printer receives the first power and the second power by the connections compliant with the USB standards, the voltage of the first power and the voltage of the second power are adjusted. Because the first power or the second power does not backflow in the first supply circuit, the printer can stably perform its functions.

In the present invention, the printer further may include a first transformer connected to the first USB port and configured to transform the voltage of the first power, and a second transformer connected to the second USB port and configured to transform the voltage of the second power. The voltage difference adjustment portion may include an adjustment circuit configured to perform one or both of transforming the voltage of the first power with the first transformer and transforming the voltage of the second power with the second transformer, based on the voltage difference. According to this, when there is a voltage difference between the voltage of the first power and the voltage of the second power, the adjustment circuit performs one or both of transforming the voltage of the first power with the first transformer, and transforming the voltage of the second power with the second transformer. Therefore, even when there is a voltage difference between the voltage of the first power and the voltage of the second power, the printer adjusts that voltage difference such that both the first power and the second power are stably supplied in parallel to the functional portion.

In the present invention, the first USB port may be connected to the first power supply via a connection compliant with the USB Power Delivery (USB PD) standards, while the second USB port may be connected to the second power supply via a connection compliant with the USB PD standards. The voltage difference adjustment portion may include a first controller configured to negotiate the combination of the voltage and a current of the first power with the first power supply, a second controller configured to negotiate the combination of the voltage and a current of the second power with the second power supply, and a unified controller configured to perform one or both of enabling the first controller to negotiate with the first power supply and enabling the second controller to negotiate with the second power supply, based on the voltage difference. According to this, when there is a voltage difference between the voltage of the first power and the voltage of the second power, the unified controller performs one or both of the negotiations conducted by the first controller 21 and the second controller 22. Therefore, even when there is a voltage difference between the voltage of the first power and the voltage of the second power, the printer adjusts that voltage difference such that both the first power and the second power are stably supplied in parallel to the functional portion.

In the present invention, the second USB port may be connected to the second power supply via a connection compliant with the USB Power Delivery (USB PD) standards, and the printer may also include a second power supply circuit configured to supply the first power received from the first USB port to the second USB port. According to this, the second power supply circuit supplies the first power to the second USB port. Because the second USB port is connected to the second power supply through a connection compliant with the USB PD standards, the printer can receive power from the second power supply through power delivery compliant with the USB PD standards.

In the present invention, the functional portion may include a print portion configured to perform printing on a medium, and the second power supply circuit may include a switch portion configured to switch between supplying power to the second USB port and stopping that supply of power. The switch portion may stop supplying power to the second USB port when the first supply circuit supplies the first power and the second power in parallel to the print portion. According to this, printing by the print portion on the medium is one of the functions executed by the printer that consumes a significant amount of power. In the printer, when the first supply circuit supplies the print portion with the first power and the second power in parallel for printing on the medium, the switch portion stops supplying power to the second power supply by stopping the supply of power to the second USB port. Because the second power is supplied as it is in parallel with the first power to the print portion, the printer can perform printing by the print portion stably.

In the present invention, the first USB port may be connected to the first power supply via a connection compliant with the USB PD standards, and the printer may further include a first controller configured to negotiate a combination of the voltage and current of the first power with the first power supply. The second power supply circuit may include a switch portion configured to switch between supplying and stopping the supply of power to the second USB port. When a negotiation request is received from the first power supply to the first controller, the switch portion may stop supplying power to the second USB port, and after the switch portion has stopped supplying power to the second USB port, the first controller may start negotiating with the first power supply. According to this, when a negotiation request is received from the first power supply while power is being supplied to the second power supply, the supply of power to the second power supply is stopped, so the functional portion receives both the first power and the second power in parallel. In this state, the first controller negotiates with the first power supply, so at least the second power is supplied to the functional portion. Thus, the printer can inhibit insufficient power from being supplied to the functional portion even when a negotiation request is received from the first power supply while power is being supplied to the second power supply.

In the present invention, the printer may further include a display portion configured to display the function, from among a plurality of the functions, which can be executed according to a total of the first power and the second power. According to this, by checking the display portion, the user can identify which functions, among the plurality of functions, can be executed based on the total of the received first power and second power.

In the present invention, the display portion includes a plurality of Light Emitting Diodes (LEDs), and may change a number of LEDs configured to illuminate according to the functions that can be executed. According to this, by checking the number of LEDs that are illuminated, the user can easily identify which of the functions, among the plurality of functions, can be executed based on the total of the received first power and second power.

In the present invention, the display portion may include an LED configured to emit a plurality of colors, and the color emitted by the LED may change according to the functions that can be executed. According to this, by checking the color emitted by the LED, the user can easily identify which of the functions, among the plurality of functions, can be executed based on the total of the received first power and second power.

In the present invention, the printer may further include an operation portion configured to receive a selection operation for the function executed by the functional portion from the functions displayed on the display portion. According to this, the printer can execute a desired function from among a plurality of functions by the user performing a selection operation on the operation portion.

In the present invention, the printer may further include a function control portion configured to control execution of the function based on the sum of the first power and the second power. According to this, because the function control portion controls the execution of the function based on the total of the first power and the second power, the printer can execute the function in accordance with the total of the received first power and second power without requiring user intervention.

In the present invention, the printer may not need a battery configured to store received power and supply the stored power to the functional portion. According to this, the printer supplies the first power and the second power to the functional portion in parallel. Even if the connection with one of the first power supply or the second power supply is momentarily interrupted , the printer can still supply power to the functional portion from the other of the first power supply or the second power supply, thus eliminating the need to use a battery to supply power to the functional portion. Therefore, the printer can be prevented from becoming bigger due to the inclusion of a battery.

### BRIEF DESCRIPTION OF DRAWINGS

FIG. 1 is a block diagram showing an electrical configuration of a printer 1A.
FIG. 2 is a block diagram showing the electrical system of the printer 1A.
FIG. 3 is a conceptual diagram of a function table 61.
FIG. 4 is a conceptual diagram of a function table 62.
FIG. 5 is a conceptual diagram of a function table 63.
FIG. 6 is a diagram illustrating a function indicator LED 15.
FIG. 7 is a diagram illustrating a power supply indicator LED 16.
FIG. 8 is a flowchart of main processing.
FIG. 9 is a flowchart continuing from the main processing shown in FIG. 8.
FIG. 10 is a flowchart continuing from the main processing shown in FIG. 9.
FIG. 11 is a flowchart continuing from the main processing shown in FIGS. 8 and 10.
FIG. 12 is a flowchart of power supply processing executed within the main processing.
FIG. 13 is a flowchart of restore execution processing executed within the main processing.
FIG. 14 is a diagram showing the differences of each printer.
FIG. 15 is a block diagram showing an electrical configuration of printers 1B and 1C.
FIG. 16 is a block diagram showing electrical systems of the printer 1B.
FIG. 17 is a block diagram showing electrical systems of the printer 1C.
FIG. 18 is a block diagram showing an electrical configuration of a printer 1D.
FIG. 19 is a block diagram showing electrical systems of the printer 1D.
FIG. 20 is a block diagram showing an electrical configuration of a printer 1E.
FIG. 21 is a block diagram showing electrical systems of the printer 1E.
FIG. 22 is a block diagram showing an electrical configuration of a printer 1F.
FIG. 23 is a block diagram showing electrical systems of the printer 1F.

### DESCRIPTION

A printer 1A according to an embodiment of the present invention will be described with reference to the drawings. The referenced drawings are used to describe the technical features that may be employed by the present invention. That is, the configuration shown in the drawing is not limited to those alone, but is merely illustrative examples, for example.

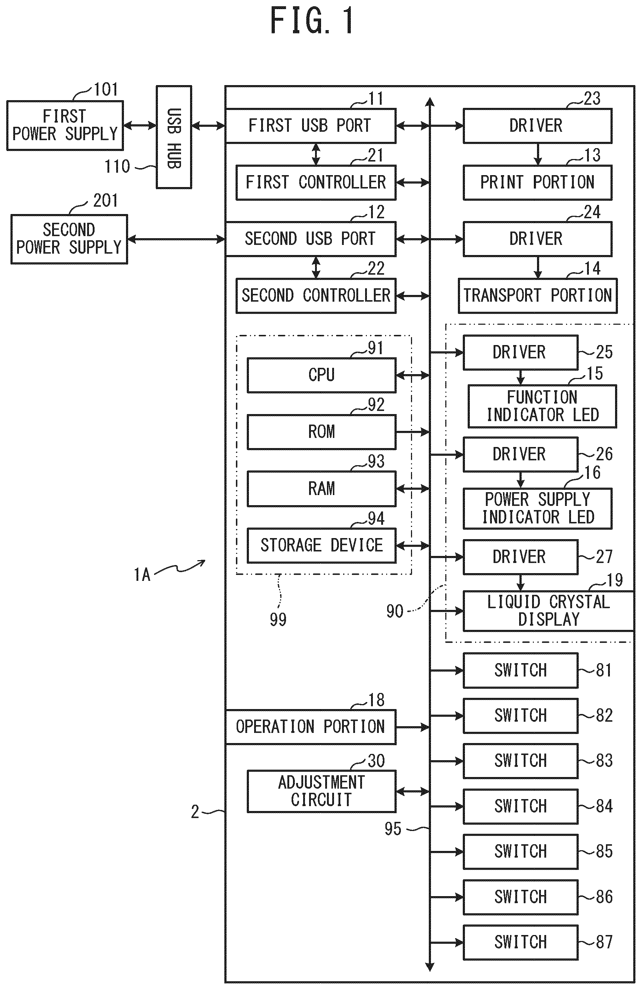

The configuration of the printer 1A will be described with reference to FIGS. 1 to 3. The printer 1A is a thermal transfer printer that performs printing on a medium not shown in the drawings. The printer 1A includes a housing 2. An operation portion 18, a liquid crystal display 19, a first USB port 11, and a second USB port 12 are located on the surface of the housing 2. The operation portion 18 is, for example, a keyboard that accepts user input operations. The liquid crystal display 19 displays various information.

The first USB port 11 and the second USB port 12 are connectors compliant with the USB Type-C standard, for example. The first USB port 11 and the second USB port 12 include a D+ pin, a D- pin, a Vbus pin, a CC pin, and others. The D+ pin and the D- pin are used for data communication compliant with USB standards. The Vbus pin is used to receive power. The CC pin is used for negotiation, which will be detailed later.

A first power supply 101 is connected to the first USB port 11 via a USB hub 110. The USB hub 110 has a plurality of USB ports. The first power supply 101 is, for example, a personal computer, and is powered by a commercial power supply. The printer 1A carries out data communication with the first power supply 101 compliant with USB standards, and receives power compliant with USB PD standards. The first power supply 101 serves as a source for supplying power to the printer 1A.

The second USB port 12 is connected to a second power supply 201. The second power supply 201 is, for example, a smartphone or a general-purpose mobile battery, and is not connected to a commercial power supply. The printer 1A performs data communication with the second power supply 201 compliant with USB standards, and receives power compliant with USB PD standards. The second power supply 201 switches, in accordance with the amount of stored power, between being a source that supplies power to the printer 1A and a sink that receives power from the printer 1A.

Enclosed within the housing 2 are a print portion 13, a driver 23, a transport portion 14, a driver 24, a first controller 21, a second controller 22, a control board 99, a system portion 90, an adjustment circuit 30, and switches 81 to 87. The print portion 13 is a thermal head that contains a plurality of heating elements and performs printing on a medium. The driver 23 is connected to a CPU 91, which will be described later, via a bus 95 and drives the print portion 13 in accordance with the control of the CPU 91. The transport portion 14 includes a motor and platen roller, not shown in the drawings, to transport the medium. The driver 24 is connected to the CPU 91 via the bus 95 and drives the transport portion 14 in accordance with the control of the CPU 91. The printer 1A performs printing on the medium with the print portion 13 while the medium is being transported by transport portion 14.

The first controller 21 negotiates with the first power supply 101 when receiving power from the first power supply 101 via the first USB port 11 compliant with USB PD standards. The negotiation is the process of determining which, for example, of the printer 1A and the first power supply 101 will serve as the source or sink, and setting the amount of power to be received. The negotiation is conducted based on the CC pin resistance value.

The second controller 22 negotiates with the second power supply 201 when receiving power from the second power supply 201 via the second USB port 12 compliant with USB PD standards. The first controller 21 and the second controller 22 are connected to the CPU 91 via the bus 95 and negotiate based on the control of the CPU 91.

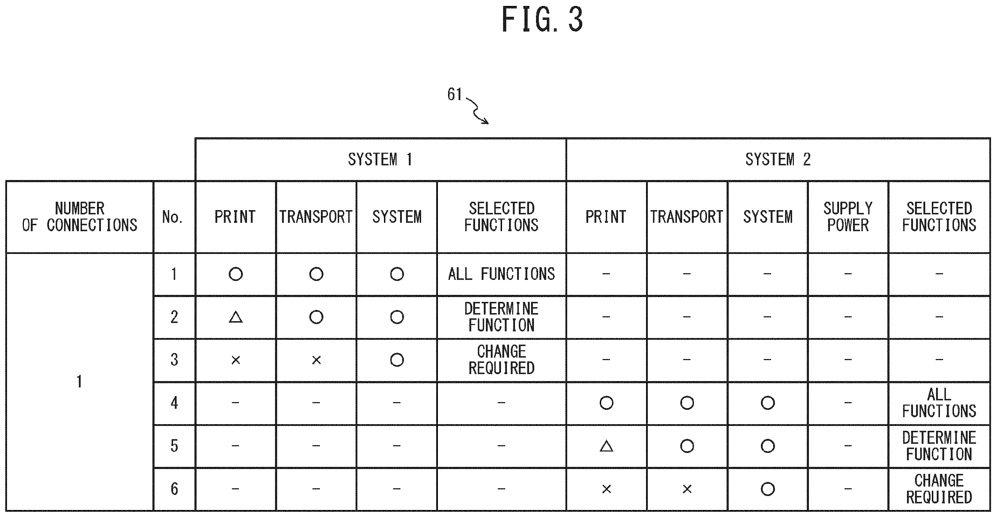

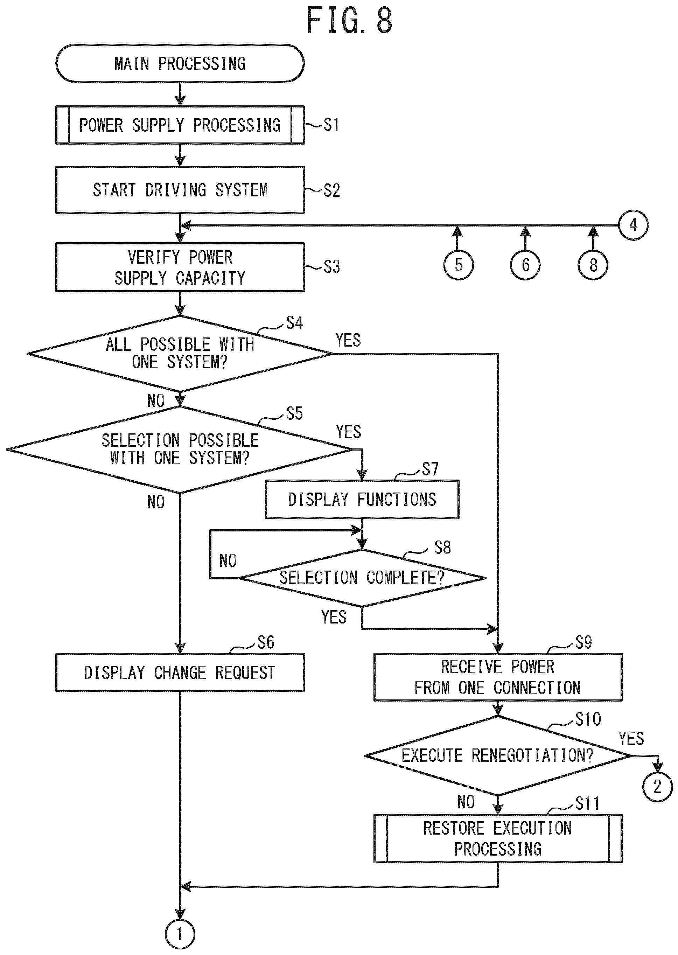

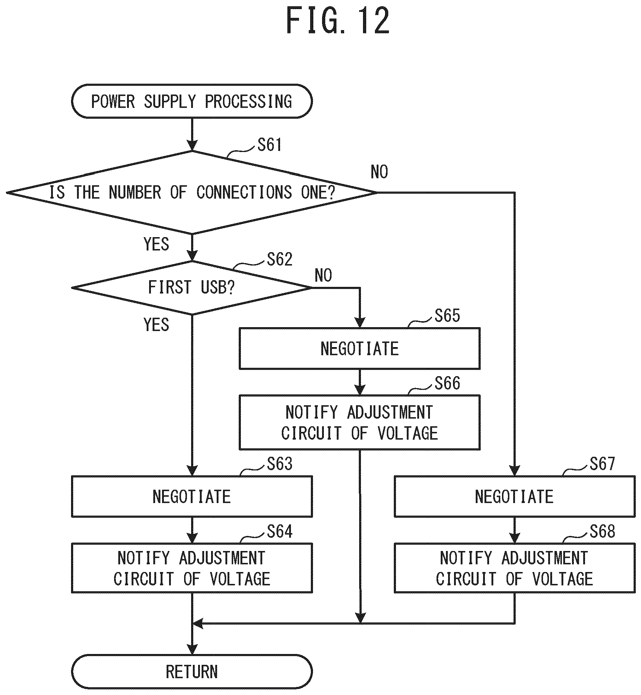

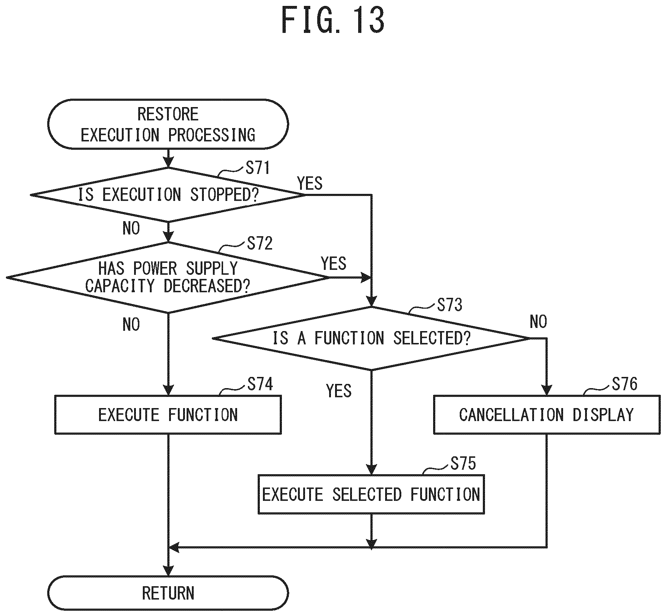

The control board 99 is responsible for controlling the printer 1A and includes the CPU 91, ROM 92, RAM 93, and a storage device 94. The CPU 91 is a processor that executes various programs for controlling the printer 1A. The CPU 91 is connected via the bus 95 to the ROM 92, the RAM 93, the storage device 94, the first controller 21, the second controller 22, the drivers 23 to 27, the operation portion 18, the adjustment circuit 30, and the switches 81 to 87, which will be described later. ROM 92 stores control programs for executing main processing (refer to FIGS. 8 to 11), power supply processing (refer to FIG. 12), and restore execution processing (refer to FIG. 13), which will be described later, along with various setting information. The RAM 93 temporarily stores various types of information. The storage device 94 is non-volatile and stores function tables 61 to 63 (refer to FIGS. 3 to 5), for example, described later.

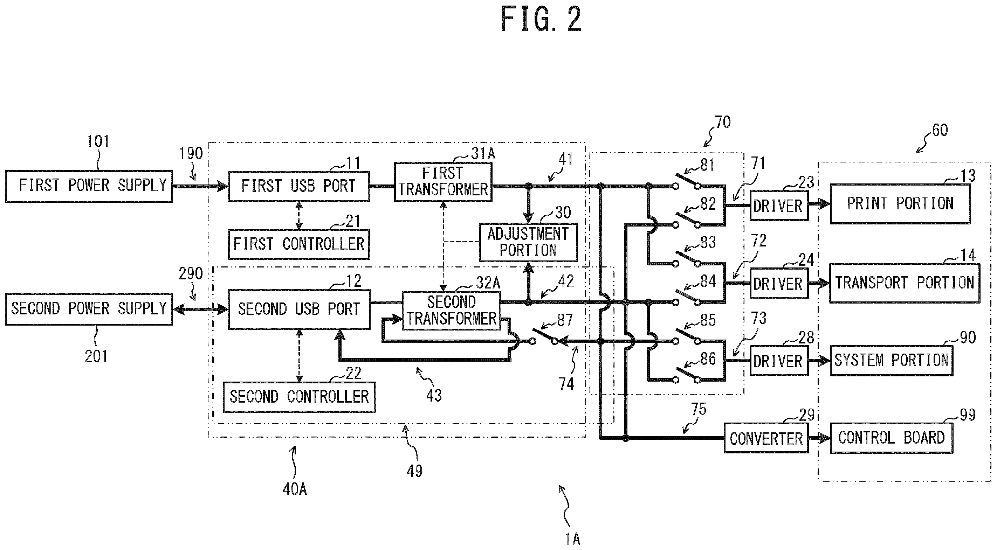

The system portion 90 is configured to display various types of information and includes a function indicator LED 15, a power supply indicator LED 16, and the liquid crystal display 19. The function indicator LED 15 is connected to the driver 25. The driver 25 drives the function indicator LED 15 based on the control of the CPU 91. The power supply indicator LED 16 is connected to the driver 26. The driver 26 drives the power supply indicator LED 16 based on the control of the CPU 91. The details of the function indicator LED 15 and power supply indicator LED 16 will be described later. The liquid crystal display 19 is connected to the driver 27. The driver 27 drives the liquid crystal display 19 based on the control of the CPU 91. The drivers 25 to 27 will be collectively referred to as the drivers 28 (refer to FIG. 2). The drivers 28 drive the system portion 90.

The switches 81 to 87 are, for example, field-effect transistors (FETs). The details of the switches 81 to 87 and the adjustment circuit 30 will be described later.

The receipt of power in the printer 1A will be described with reference to FIG. 2. The printer 1A receives power from the first power supply 101 and the second power supply 201 compliant with the USB Power Delivery (USB PD) standard. The printer 1A stores the received power. As the printer 1A does not have a battery to supply power to the functions of the printer 1A, it does not have a DC connector for receiving power via a connection that is not compliant with USB standards. In other words, the printer 1A operates on the power supplied from the first power supply 101 and the second power supply 201 alone.

The electrical power supplied from the first power supply 101 via the first USB port 11 will be referred to as a first power 190. In the embodiment, the amount of the first power 190, along with the combination of voltage and current of the first power 190, is determined through negotiations with the first power supply 101 by the first controller 21. The electrical power supplied from the second power supply 201 via the second USB port 12 will be referred to as a second power 290. The amount of the second power 290, along with the combination of voltage and current of the second power 290, is determined through negotiations with the second power supply 201 by the second controller 22.

When the first power supply 101 is connected to the first USB port 11 while the second power supply 201 is connected to the second USB port 12, the CPU 91 causes the first controller 21 to negotiate so that the voltage of the first power 190 becomes the same as the voltage of the second power 290. Similarly, when the second power supply 201 is connected to the second USB port 12 while the first power supply 101 is connected to the first USB port 11, the CPU 91 causes the second controller 22 to negotiate so that the voltage of the second power 290 becomes the same as the voltage of the first power 190. In this manner, when the first power 190 and the second power 290 are simultaneously supplied to the printer 1A, the CPU 91 adjusts the voltage of the first power 190 and the voltage of the second power 290 to be the same using the first controller 21 or the second controller 22.

The first USB port 11 connects to one end of a first transformer 31A. The first transformer 31A continuously transforms the voltage of the first power 190. The second USB port 12 is connected to a second transformer 32A. The second transformer 32A continuously transforms the voltage of the second power 290. The first transformer 31A and the second transformer 32A are, for example, DC-DC converters.

The other end of the first transformer 31A is connected to a power line 41. The other end of the second transformer 32A is connected to power lines 42 and 43. The details of the power line 43 will be described later. The power line 41 is connected to the adjustment circuit 30, one end of the switch 81, one end of the switch 83, one end of the switch 85, a power line 74, and a power line 75. The power line 42 is connected to the adjustment circuit 30, the one end of each of the switch 82, the switch 84, and the switch 86, and to the power line 75.

The adjustment circuit 30 detects each of the voltages of the first power 190 and the second power 290. When a difference is detected between the detected voltage of the first power 190 and the voltage of the first power 190 received from the CPU 91, the adjustment circuit 30 outputs a signal to the first transformer 31A to correct the voltage difference. Upon receiving the signal, the first transformer 31A transforms the voltage of the first power 190 based on the received signal. When a difference is detected between the detected voltage of the second power 290 and the voltage of the second power 290 received from the CPU 91, the adjustment circuit 30 outputs a signal to the second transformer 32A to correct the voltage difference. Upon receiving this signal, the second transformer 32A transforms the voltage of the second power 290 based on the received signal. The CPU 91 causes the first controller 21 and the second controller 22 to negotiate, based on the voltage difference between the voltage of the first power 190 and the voltage of the second power 290. Accordingly, the voltage of the first power 190 in the power line 41 and the voltage of the second power 290 in the power line 42 are adjusted to be the same. In this way, the adjustment circuit 30 adjusts the voltage difference between the voltage of the first power 190 and the voltage of the second power 290. The CPU 91, the first controller 21, the second controller 22, and the adjustment circuit 30, which adjust the voltage difference between the voltage of the first power 190 and the voltage of the second power 290, are collectively referred to as a voltage difference adjustment portion 40A.

The other ends of switches 81 and 82 are connected to a power line 71. The power line 71 is connected to the print portion 13 via the driver 23. The other ends of switches 83 and 84 are connected to a power line 72. The power line 72 is connected to the transport portion 14 via the driver 24. The other ends of switches 85 and 86 are connected to a power line 73. The power line 73 is connected to the system portion 90 via the driver 28.

The print portion 13, transport portion 14, the control board 99, and the system portion 90 are collectively referred to as a functional portion 60. The functional portion 60 performs the various functions of the printer 1A. The parts that supply power to the functional portion 60, including the power lines 41 and 42, the switches 81 to 86, the power lines 71 to 73, and 75, and part of the power line 74, are collectively referred to as a first supply circuit 70. The first supply circuit 70 connects the first USB port 11 and the second USB port 12 to the functional portion 60 in parallel. As a result, the first power 190 and the second power 290 are supplied in parallel to the functional portion 60.

The power line 74 connects to one end of the switch 87. The other end of the switch 87 connects to one end of the second transformer 32A. The power line 43 connected to the other end of the second transformer 32A connects to the second USB port 12. The power line 74, the switch 87, and the power line 43 are collectively referred to as a second power supply circuit 49. The second power supply circuit 49 supplies the first power 190 received from the first USB port 11 to the second USB port 12. At the second USB port 12, power is received by the second power supply 201 compliant with USB PD standards. That is, when the printer 1A becomes the source supplying power to the second power supply 201 through negotiations by the second controller 22, the printer 1A supplies the first power 190 to the second power supply 201 via the second USB port 12. The switch 87 switches between supplying and stopping the supply of the first power 190 to the second USB port 12.

The power line 75 is connected to one end of a converter 29. The other end of the converter 29 is connected to the control board 99. The converter 29 steps down the voltage of the first power 190 and the second power 290, and supplies the first power 190 and the second power 290 to the control board 99. The CPU 91, the ROM 92, the RAM 93, and the storage device 94 of the control board 99 are driven by the first power 190 and the second power 290 supplied from converter 29. A switch to switch between supplying and stopping the supply of first power 190 and the second power 290 to the converter 29 is not provided in the power line 75. Therefore, the CPU 91, the ROM 92, the RAM 93, and the storage device 94 start to operate at the point when power is supplied from one or both of the first power supply 101 and the second power supply 201.

The relationship between the amount of power supplied and the functions of the printer 1A that can be executed will be described with reference to FIGS. 3 to 5. The printer 1A drives the functional portion 60 with power supplied from the first power supply 101 and the second power supply 201 alone. Therefore, in the printer 1A, depending on the amount of power supplied from the first power supply 101 and the second power supply 201, there may be cases where the content of some functions is altered, or the execution of some functions is suspended. Within the functional portion 60, power consumption is highest in the order of the print portion 13, the transport portion 14, and the system portion 90. Note that both the control board 99 and the system portion 90 can execute functions with the minimum power supply of 2.5W compliant with USB standards. However, executing the functions of the print portion 13 and the transport portion 14 requires power greater than 2.5W.

The function tables 61 to 63 stored in the storage device 94 shows the relationship between the combination of connections of the first USB port 11 and the second USB port 12, the amount of the power supplied from the first USB port 11 and the second USB port 12, and the executable functions of the printer 1A. For example, in No. 1 of the function table 61 in FIG. 3, it is shown that the printer 1A receives power through the first USB port 11 alone and can execute all of the functions executable by the functional portion 60 with the power supplied from the first power supply 101. In the function tables 61 to 63, the content of the functions indicated by the symbol "△" will be modified. For example, in No. 2 of the function table 61 in FIG. 3, the function of the print portion 13 is modified, and the print portion 13 performs printing on the medium at a slower speed than usual.

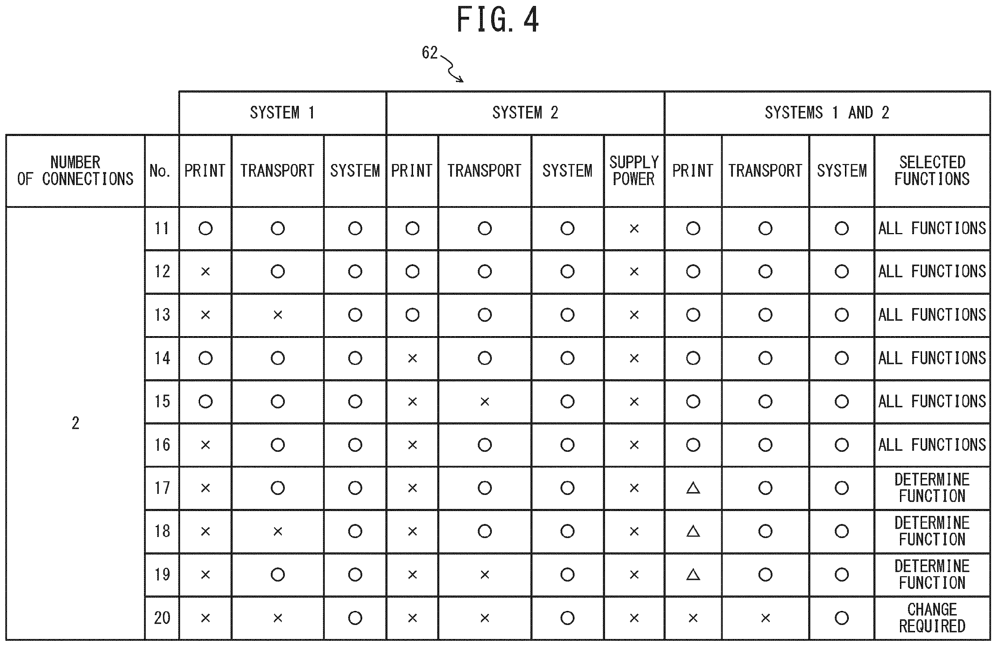

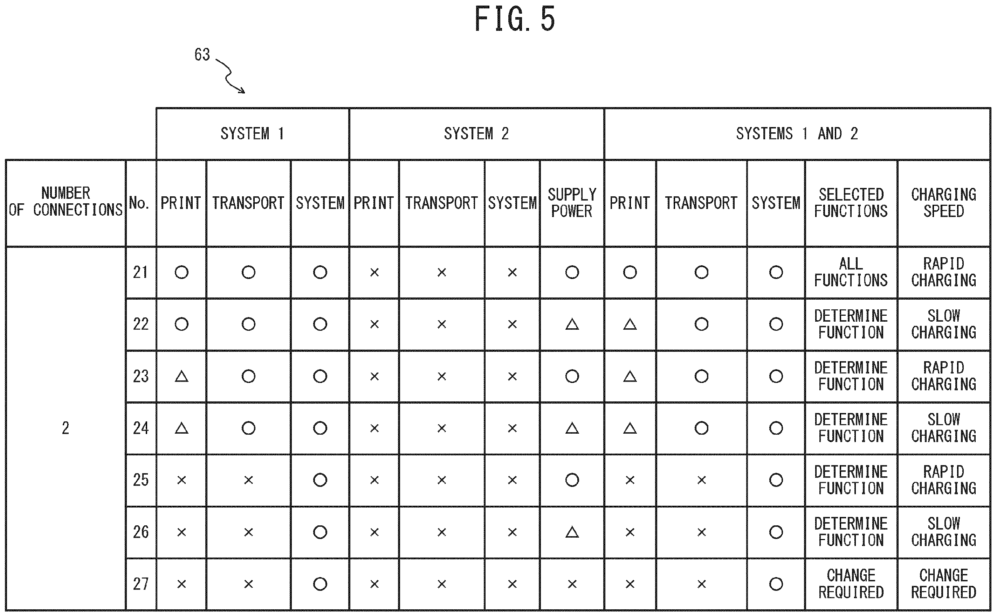

As shown in the function table 62 of FIG. 4, when the functional portion 60 is supplied with the first power 190 and the second power 290 in parallel, the executable functions and the content of the executed functions are determined according to the combined amount of the first power 190 and the second power 290. As shown in the function table 63 of FIG. 5, when supplying power to the second power supply 201 via the second USB port 12, the first power 190 alone is provided to the printer 1A.

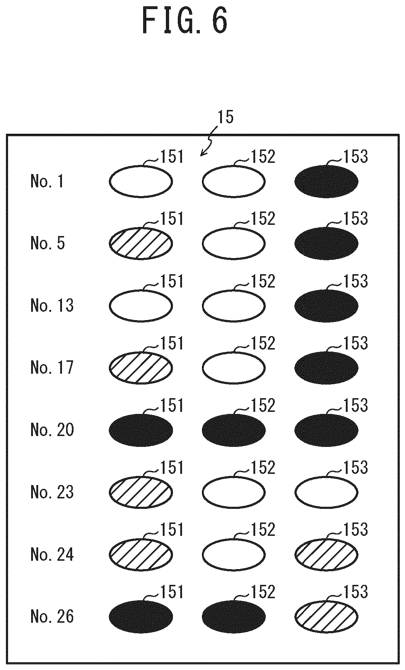

The function indicator LED 15 will be described with reference to FIG. 6. The function indicator LED 15 shows the functions of the printer 1A that can be executed with the total power derived from the first power 190 and the second power 290. The function indicator LED 15 includes three LEDs 151, 152, and 153. The LEDs 151, 152, and 153 are, for example, full-color LEDs capable of emitting light in a plurality of colors. In FIG. 6, black indicates that the LEDs 151, 152, and 153 are turned off, positively sloped lines indicate that the LEDs 151, 152, and 153 are emitting orange light, and white indicates that LEDs 151, 152, and 153 are emitting blue light.

In the function indicator LED 15, the LEDs 151, 152, 153 correspond to the functions of the printer 1A respectively. The function indicator LED 15 displays the functions of printer 1A that can be executed with the total power of both the first power 190 and the second power 290, by the color emitted by the LEDs 151, 152, and 153.

The LED 151 corresponds to a printing function of the printer 1A. When LED 151 lights up in blue, it indicates that the printer 1A can perform normal printing with the print portion 13. When the LED 151 lights up in orange, it indicates that the printer 1A can perform printing at a slower speed than usual with the print portion 13. When the LED 151 is off, it indicates that the printer 1A cannot perform printing with the print portion 13.

The LED 152 corresponds to a transport function of the printer 1A. When the LED 152 lights up in blue, it indicates that the printer 1A can transport a medium with the transport portion 14. When the LED 152 is off, it indicates that the printer 1A cannot transport the medium with the transport portion 14. Note that in this embodiment, the LED 152 does not light up in orange.

The LED 153 corresponds to a charging function of printer 1A. When the LED 153 lights up in blue, it indicates that the printer 1A can rapidly charge the second power supply 201. When the LED 153 lights up in orange, it indicates that the printer 1A can charge the second power supply 201 at a slow rate. When the LED 153 is off, it indicates that the printer 1A cannot charge the second power supply 201. Note that since the system portion 90 can operate with the minimum power supply compliant with USB standards, the system portion 90 becomes operable at the time the first power supply 101 or the second power supply 201 is connected to the printer 1A. Therefore, in this embodiment, the LED corresponding to a control function of the printer 1A is not included in the function indicator LED 15.

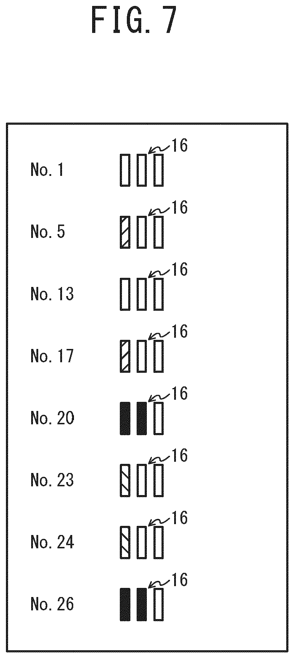

The power supply indicator LED 16 will be described with reference to FIG. 7. The power supply indicator LED 16 indicates the amount of the total power from both the first power 190 and the second power 290, and displays the functions of the printer 1A that can be executed with the total power. The power supply indicator LED 16 includes three LEDs. These three LEDs, for example, emit green light. In FIG. 7, black indicates that the LED is off, negatively sloped lines indicate that the LED is blinking, and white indicates that the LED is on. In the description below, the right of the page corresponds to the right of the power supply indicator LED 16, and the left of the page corresponds to the left of the power supply indicator LED 16.

The power supply indicator LED 16 displays, by the number of LEDs that are lit up, the amount of the total power, which is a total of the first power 190 and the second power 290, as well as the functions of the printer 1A that can be executed with the total power. When the power supply indicator LED 16 indicates that the amount of the total power is such that only the control function of the printer 1A can be executed, from among the functions of the printer 1A, only the LED on the far right of the three LEDs lights up.

When the total power is sufficient to execute the transport and control functions of printer 1A, two of the three LEDs on the right of the power supply indicator LED 16 light up. When the total power is sufficient to execute the printing, transport, and control functions of printer 1A, all three LEDs on the power supply indicator LED 16 light up. Note that when the printing function, the transport function, and the control function of the printer 1A can be executed but the print portion 13 cannot perform normal printing and can only perform printing at a slower speed than usual, the LED on the left blinks while the two LEDs on the right light up. The function indicator LED 15, which displays the functions of printer 1A that can be executed with the total power of the first power 190 and the second power 290, and the power supply indicator LED 16, are collectively referred to as a display portion 17.

The control when the printer 1A supplies power to the second power supply 201 will be described with reference to FIG. 2. When the first supply circuit 70 of the printer 1A supplies the first power 190 and the second power 290 to the print portion 13 in parallel, the printer 1A opens the switch 87 to stop the supply of power to the second USB port 12. Subsequently, the printer 1A negotiates with the second power supply 201 via the second controller 22 and receives power from the second power supply 201. Consequently, the printer 1A supplies both the first power 190 and the second power 290 in parallel to the print portion 13, enabling printing to be performed by the print portion 13.

Also, when the printer 1A renegotiates with the first controller 21 and the first power supply 101 while supplying power to the second power supply 201, the supply of power to the second USB port 12 is stopped by opening the switch 87. After stopping the supply of power to the second USB port 12, the first controller 21 starts renegotiating with the first power supply 101. Renegotiation occurs when, for example, an additional device different from the first power supply 101 is further connected to the USB hub 110, and when the connected device is powered by the first power supply 101, the first power 190 is reduced. When the first controller 21 and the first power supply 101 carry out renegotiation, the supply of power from the first power supply 101 is momentarily interrupted. After the printer 1A stops the supply of power to the second power supply 201, the second controller 22 negotiates with the second power supply 201, and power is received from the second power supply 201, the first controller 21 and the first power supply 101 initiate renegotiation. As a result, the printer 1A supplies the second power 290 to the functional portion 60 even when the first controller 21 renegotiates with the first power supply 101, so the supply of power to the functional portion 60 is inhibited from being momentarily interrupted.

Main processing executed by the CPU 91 will be described with reference to FIGS. 8 to 11. In the main process, primarily the receipt of power is controlled. The main processing starts when power is supplied to the printer 1A. More specifically, when the first power supply 101 or the second power supply 201 is connected to the printer 1A while neither the first power supply 101 nor the second power supply 201 are connected the printer 1A, the first power 190 or the second power 290 is supplied to the control board 99 via the power line 75. At this time, the first controller 21 or the second controller 22 negotiates with either of the corresponding first power supply 101 or the second power supply 201 independent of the control of the CPU 91. When power is supplied to control board 99, the CPU 91 reads a control program for executing the main processing from the ROM 92. Consequently, the CPU 91 starts the main processing. As shown in FIG. 8, when the main processing starts, the CPU 91 executes the power supply processing shown in FIG. 12 (step S1).

The power supply processing executed within the main processing will be described with reference to FIG. 12. In the power supply processing, the amount of power received by the printer 1A is determined. When the power supply processing starts, the CPU 91 determines whether the number of power supplies connected to the printer 1A is one (step S61).

When the CPU 91 determines that the number of connected power supplies is one (yes at step S61), it then determines whether the first USB port 11 is connected to the first power supply 101 (step S62). When the CPU 91 determines that the first USB port 11 is connected to the first power supply 101 (yes at step S62), the CPU 91 causes the first controller 21 to negotiate with the first power supply 101 (step S63). The CPU 91 outputs a signal to notify the adjustment circuit 30 of the amount of voltage of the first power 190 that was determined through negotiation (step S64). Based on the received signal, the adjustment circuit 30 adjusts the amount of the voltage of the first power 190 in the power line 41 with the first transformer 31A. The CPU 91 then returns the processing to the main processing.

When the CPU 91 determines that the first USB port 11 is not connected to the first power supply 101 (no at step S62), assuming that the second USB port 12 is connected to the second power supply 201, and the CPU 91 causes the second controller 22 to negotiate with the second power supply 201 (step S65). The CPU 91 outputs a signal to notify the adjustment circuit 30 of the amount of the voltage of the second power 290, as determined by the negotiation (step S66). Based on the received signal, the adjustment circuit 30 adjusts the amount of the voltage of the second power 290 in the power line 42 with the second transformer 32A. The CPU 91 then returns the processing to the main processing.

When CPU 91 determines that the number of connected power supplies is not one (no at step S61), it executes a negotiation assuming that the first USB port 11 is connected to the first power supply 101, and the second USB port 12 is connected to the second power supply 201 (step S67). In the negotiation of step S67, the CPU 91 executes negotiations with the first power supply 101 with the first controller 21, and executes negotiations with the second power supply 201 with the second controller 22. The CPU 91 executes the negotiation so that the voltage of the first power 190 and the voltage of the second power 290 become the same. The CPU 91 outputs a signal to notify the adjustment circuit 30 of the amount of the voltage determined by the negotiations (step S68). Based on the received signal, the adjustment circuit 30 uses the first transformer 31A and the second transformer 32A to adjust the voltage of the first power 190 in power line 41 and the voltage of the second power 290 in power line 42 so that they are the same. The CPU 91 then returns the processing to the main processing.

As shown in FIG. 8, after the CPU 91 executes the power supply processing (step S1), the CPU 91 closes the switches 85 and 86 to supply power to the system portion 90, thereby initiating display by the system portion 90 (step S2). The printer 1A is connected to either the first power supply 101 or the second power supply 201.

The CPU 91 verifies the amount of power supplied from the power supplies (step S3). The CPU 91 determines whether it is possible to execute all functions of the printer 1A with the verified power (step S4). When the CPU 91 determines that it is possible to execute all functions of the printer 1A with the verified power (yes at step S4), the processing proceeds on to step S9.

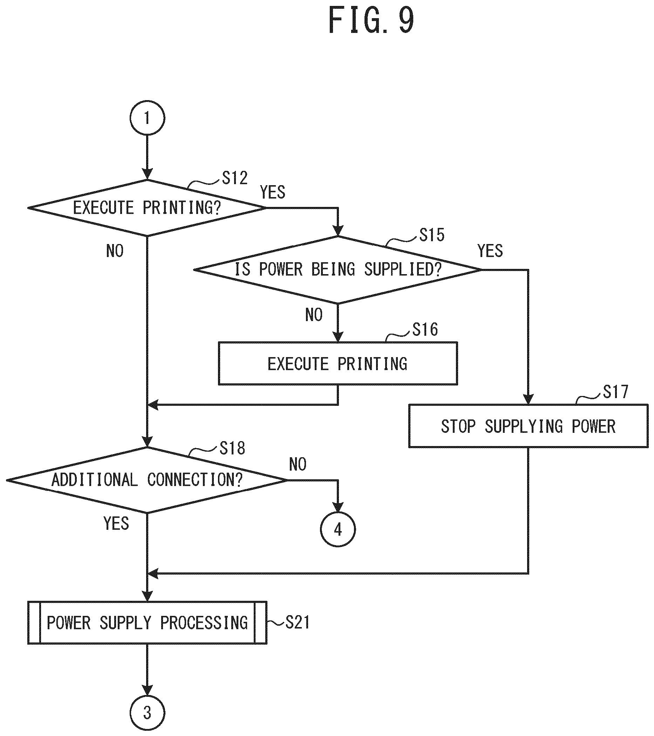

When the CPU 91 determines that it cannot execute all functions of the printer 1A with the verified power (no at step S4), it determines whether it is possible to select a function to be executed from a plurality of functions with the verified power (step S5). When the CPU 91 determines that it cannot select a function to be executed from a plurality of functions with the verified power (no at step S5), it displays on the liquid crystal display 19 a screen prompting the connection to a power supply that can supply greater power, as only control by the system portion 90 can be executed (step S6). The CPU 91 then moves the processing on to step S12 shown in FIG. 9.

When the CPU 91 determines that it is possible to select a function to be executed from a plurality of functions with the verified power (yes at step S5), the CPU 91 causes the liquid crystal display 19 to display the functions that the functional portion 60 can execute (step S7). The user checks the functions displayed on the liquid crystal display 19 and selects a function or functions to be executed by the functional portion 60 using the operation portion 18. The operation portion 18 accepts the selection by the user and outputs it to the CPU 91. The CPU 91 determines whether selection by the user is complete (step S8). When the CPU 91 determines that selection by the user is not complete (no at step S8), it returns the processing to step S8.

When the CPU 91 determines that the selection by the user is complete (yes at step S8), it receives the power determined by the negotiation from the power supply (step S9). In the functional portion 60, power is supplied from either the first power supply 101 or the second power supply 201 connected to the printer 1A. The CPU 91 determines whether to execute renegotiation (step S10). When the CPU 91 determines not to execute renegotiation (no at step S10), it executes the restore execution processing (step S11). The restore execution processing is processing to restore a function executed by the functional portion 60 when there has been a change in the power received from the power supply. The details of the restore execution processing will be described later. The CPU 91 then moves the processing on to step S12 shown in FIG. 9.

As shown in FIG. 9, the CPU 91 determines whether to execute printing by the print portion 13 (step S12). When the CPU 91 determines not to execute printing by the print portion 13 (no at step S12), the CPU 91 moves the processing on to step S18. When the CPU 91 determines to execute printing by the print portion 13 (yes at step S12), the CPU 91 determines whether power is being supplied to the second power supply 201 (step S15). When the CPU 91 determines that power is being supplied to the second power supply 201 (yes at step S15), the CPU 91 opens the switch 87 to stop supplying power to the second power supply 201 (step S17). The CPU 91 then moves the processing on to step S21.

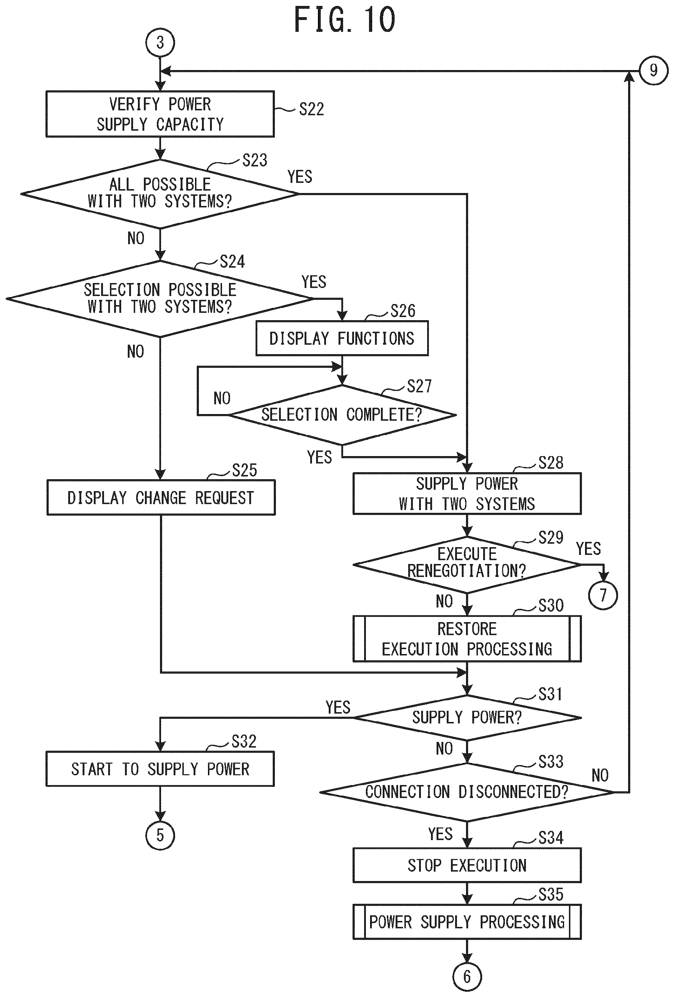

When the CPU 91 determines that power is not being supplied to the second power supply 201 (no at step S15), printing is performed on the medium by the print portion 13 (step S16), and the processing proceeds on to step S18. The CPU 91 determines whether the first power supply 101 or the second power supply 201 has been additionally connected (step S18). When the CPU 91 determines that the first power supply 101 or the second power supply 201 has not been additionally connected (no at step S18), the processing returns to step S3 shown in FIG. 8. When the CPU 91 determines that the first power supply 101 or the second power supply 201 has been additionally connected (yes at step S18), the CPU 91 executes the power supply processing (step S21). The power supply processing in step S21 is the same as the power supply processing in step S1. Both the first power supply 101 and the second power supply 201 are connected to the printer 1A. The CPU 91 then moves the processing on to step S22 shown in FIG. 10.

As shown in FIG. 10, the CPU 91 verifies the amounts of the first power 190 and the second power 290 supplied from the first power supply 101 and the second power supply 201, respectively (step S22). The CPU 91 determines whether it can execute all of the functions of the printer 1A with the total power of the first power 190 and the second power 290 verified in step S22 (step S23). When the CPU 91 determines that all of the functions can be executed with the total power (yes at step S23), the processing proceeds on to step S28.

When the CPU 91 determines that all of the functions cannot be executed with the total power (no at step S23), the CPU 91 determines whether it is possible to select a function to be executed from the plurality of functions with the total power (step S24). When the CPU 91 determines that it cannot select a function to be executed from the plurality of functions with the total power (no at step S24), the CPU 91 assumes that only control by the system portion 90 can be executed and displays a screen on the liquid crystal display 19 prompting connection to a power supply capable of supplying greater power (step S25). The CPU 91 moves the processing on to step S31.

When the CPU 91 determines that it is possible to select a function to be executed from the plurality of functions with the total power (yes at step S24), the CUP 91 causes the liquid crystal display 19 to display the functions that the functional portion 60 can execute (step S26). The user checks the functions shown on the liquid crystal display 19 and uses the operation portion 18 to select a function or functions to be executed by the functional portion 60. The operation portion 18 accepts the selection from the user and outputs it to the CPU 91. The CPU 91 determines whether selection by the user is complete (step S27). When the CPU 91 determines that selection by the user is not complete (no at step S27), the processing returns to step S27.

When the CPU 91 determines that selection by the user is complete (yes at step S27), the CPU 91 receives the power determined by negotiations from the first power supply 101 and the second power supply 201 (step S28). The functional portion 60 receives the first power 190 and the second power 290 in parallel. The CPU 91 determines whether to execute renegotiation (step S29). When the CPU 91 determines not to execute renegotiation (no at step S29), the CPU 91 executes the restore execution processing and moves the processing on to step S31 (step S30).

The CPU 91 determines whether to supply power to the second power supply 201 (step S31). When the CPU 91 determines to supply power to the second power supply 201 (yes at step S31), the CPU 91 closes the switch 87 to supply power to the second power supply 201 (step S32). The CPU 91 then returns the processing to step S3 shown in FIG. 8.

When the CPU 91 has been determined not to supply power to the second power supply 201 (no at step S31), the CPU 91 then determines whether the connection of the first power supply 101 or the second power supply 201 has been disconnected (step S33). When the CPU 91 determines that the connection of the first power supply 101 or the second power supply 201 has not been disconnected (no at step S33), the processing returns to step S22.

When the CPU 91 determines that the connection to either the first power supply 101 or the second power supply 201 has been disconnected (yes at step S33), the CPU 91 pauses the execution of some functions of the functional portion 60 other than the control board 99 and the system portion 90 (step S34). The CPU 91 executes the power supply processing (step S35) and then returns to processing to step S3 shown in FIG. 8.

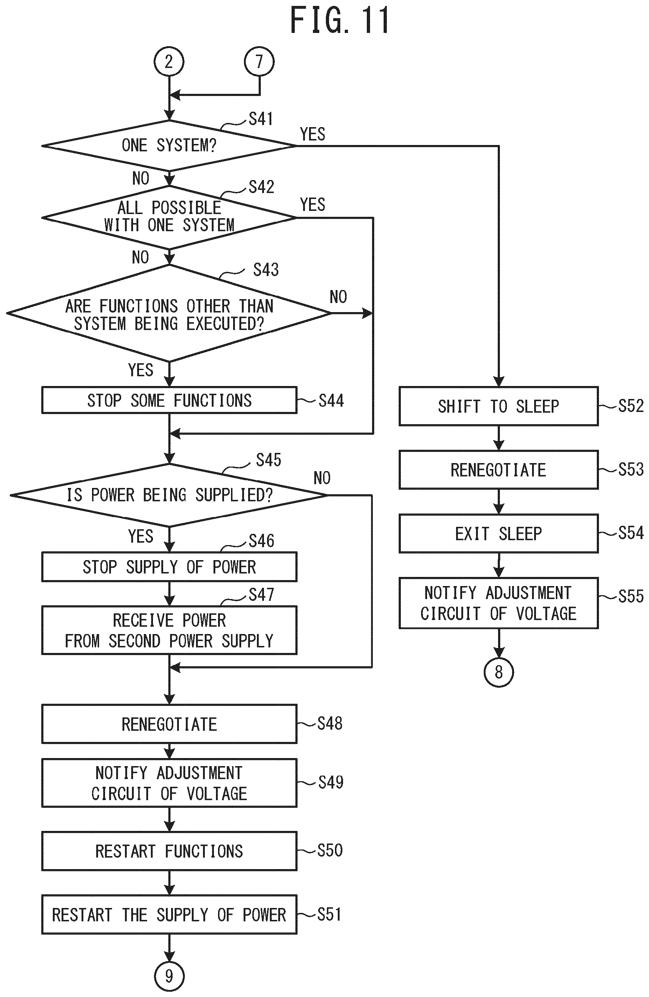

As shown in Figure 11, when the CPU 91 determines to execute renegotiation (yes at step S10, yes at step S29), the CPU 91 determines whether only one power supply is connected (step S41). When the CPU 91 determines that the number of connected power supplies is not one (no at step S41), assuming that it considers both the first power supply 101 and the second power supply 201 to be connected to the printer 1A, and determines whether all of the functions of the printer 1A can be executed with only either the first power 190 or the second power 290 (step S42).

When the CPU 91 determines that all of the functions of the printer 1A can be executed with only either the first power 190 or the second power 290 (yes at step S42), the processing proceeds to step S45. When the CPU 91 determines that it cannot execute all of the functions of the printer 1A with only either the first power 190 or the second power 290 (no at step S42), the CPU 91 determines whether some functions of the printer 1A other than the control board 99 and the system portion 90 are being executed (step S43). When the CPU 91 determines that the printer 1A is not executing some functions other than the control board 99 and the system portion 90 (no at step S43), the CPU 91 moves the processing on to step S45. When the CPU 91 determines that the printer 1A is executing some functions other than the control board 99 and the system portion 90 (yes at step S43), the CPU 91 opens the switches 81 to 84 to stop the functions of the functional portion 60 other than the control board 99 and the system portion 90 (step S44), and moves the processing on to step S45.

The CPU 91 determines whether power is being supplied from the printer 1A to the second power supply 201 (step S45). When the CPU 91 determines that power is not being supplied from the printer 1A to the second power supply 201 (no at step S45), the processing proceeds on to step S48. When the CPU 91 determines that power is being supplied from the printer 1A to the second power supply 201 (yes at step S45), the CPU 91 opens the switch 87 to stop supplying power to the second power supply 201 (step S46). The CPU 91 performs negotiations with the second power supply 201 using the second controller 22, receives power from the second power supply 201 (step S47), and moves the processing on to step S48.

The CPU 91 performs renegotiation with a power supply as requested by the first controller 21 or the second controller 22 (step S48). The CPU 91 outputs a signal to notify the adjustment circuit 30 of the amount of the voltage determined through the renegotiation (step S49). Based on the received signal, the adjustment circuit 30 adjusts the amount of the voltage of the first power 190 in the power line 41 with the first transformer 31A, and adjusts the amount of the voltage of the second power 290 in the power line 42 with the second transformer 32A. The CPU 91 resumes the function paused at step S44 (step S50). The processing in step S50 is omitted when the processing in step S44 has not been executed. The CPU 91 resumes the supply of power to the second power supply 201, which was stopped at step S46 (step S51). The processing in step S51 is omitted when the processing in step S46 has not been executed. The CPU 91 returns the processing to step S22 shown in FIG. 10.

When the CPU 91 determines that the number of connected power supplies is one (yes at step S41), assuming that either the first power supply 101 or the second power supply 201 as being connected to the printer 1A, and put the printer 1A into a sleep state (step S52). In the sleep state, the supply of power to components other than the CPU 91, the ROM 92, the RAM 93, the storage device 94, the first controller 21, and the second controller 22 is stopped.

The CPU 91 performs renegotiation with either the first power supply 101 or the second power supply 201, which is connected to the printer 1A (step S53). The CPU 91 exits the sleep state that the printer 1A was put into at step S52 (step S54). The CPU 91 outputs a signal to notify the adjustment circuit 30 of the amount of the voltage determined by the renegotiation (step S55). The CPU 91 returns the processing to step S3 shown in FIG. 8.

The restore execution processing executed within the main processing will be described with reference to FIG. 13. When the restore execution processing is started, the CPU 91 determines whether the execution of a function is being paused based on the processing in step S34 shown in FIG. 10 (step S71). When the CPU 91 determines that the execution of a function is being paused (yes at step S71), the processing proceeds on to step S73.

When the CPU 91 determines that execution of a function is not being paused (no at step S71), the CPU 91 determines whether the power supplied from a power supply has decreased due to the renegotiation (step S72). When the CPU 91 determines that the power supplied from the power supply has not decreased (no at step S72), the CPU 91 executes the function by the functional portion 60 (step S74) and returns the processing to the main processing.

When the CPU 91 determines that the execution of a function is being paused (yes at step S71), or when the CPU 91 determines that the power supplied from the power supply has decreased (yes at step S72), the CPU 91 determines whether a function is selected from a plurality of functions (step S73). When the CPU 91 determines that a function has been selected during the processing in step S8 and step S27 (yes at step S73), the CPU 91 executes the selected function of the functional portion 60 (step S75) and returns the processing to the main processing. When the CPU 91 determines that a function has not been selected (no at step S73), the CPU 91 displays on the liquid crystal display 19 a cancellation indication indicating that the execution of a function by the functional portion 60, other than the control board 99 and the system portion 90, has been cancelled (step S76), and returns the processing to the main processing.

As described above, the printer 1A includes the first USB port 11, the second USB port 12, the functional portion 60, the first supply circuit 70, and the voltage difference adjustment portion 40A. The first USB port 11 receives the first power 190 from the first power supply 101. The second USB port 12 receives the second power 290 from the second power supply 201. The functional portion 60 performs the functions of the printer 1A. The first supply circuit 70 connects the first USB port 11 and the second USB port 12 in parallel to the functional portion 60. The voltage difference adjustment portion 40A adjusts the voltage difference between the voltage of the first power 190 and the voltage of the second power 290. According to this, the functional portion 60 is supplied with both the first power 190 and the second power 290 in parallel. Here, when the first supply circuit 70 supplies both the first power 190 and the second power 290 in parallel to the functional portion 60, a voltage difference between the voltage of the first power 190 and the voltage of the second power 290 may occur within the first supply circuit 70. This voltage difference may arise, for example, when the connection to either of the first power supply 101 or the second power supply 201 is momentarily interrupted. The voltage difference adjustment portion 40A of the printer 1A adjusts the voltage difference in the first supply circuit 70, so the first power 190 or the second power 290 does not backflow in the first supply circuit 70. Consequently, the printer 1A can supply both the first power 190 and the second power 290 in parallel to the functional portion 60, so even if the connection with either the first power supply 101 or the second power supply 201 is momentarily interrupted, the printer 1A can continue to reliably execute the functions of the printer 1A by receiving power from the other of the first power supply 101 or the second power supply 201.

The first USB port 11 connects to the first power supply 101 via a connection compliant with the USB standards. The second USB port 12 connects to the second power supply 201 via a connection compliant with the USB standards. According to this, even when the printer 1A is configured to receive the first power 190 and the second power 290 via a connection compliant with the USB standards, the voltage of the first power 190 and the voltage of the second power 290 are adjusted. Because the first power 190 or the second power 290 does not backflow in the first supply circuit 70, the printer 1A can perform its functions stably.

The printer 1A further includes the first transformer 31A and the second transformer 32A. The voltage difference adjustment portion 40A includes the adjustment circuit 30. The adjustment circuit 30 transforms the amount of voltage of the first power 190 in the power line 41 with the first transformer 31A, and transforms the amount of voltage of the second power 290 in the power line 42 with the second transformer 32A. According to this, the adjustment circuit 30 transforms the voltage of the first power 190 with the first transformer 31A, and transforms the voltage of the second power 290 with the second transformer 32A. Therefore, even when a voltage difference occurs between the voltage of the first power 190 and the voltage of the second power 290, the printer 1A adjusts the voltage difference, so the first power 190 and the second power 290 can be stably supplied in parallel to the functional portion 60.

In the printer 1A, the first USB port 11 is connected to the first power supply 101 via a connection compliant with USB PD standards. The second USB port 12 is connected to the second power supply 201 via a connection compliant with USB PD standards. The voltage difference adjustment portion 40A includes the first controller 21, the second controller 22, and the CPU 91. The first controller 21 negotiates with the first power supply 101. The second controller 22 negotiates with the second power supply 201. The CPU 91 causes the first controller 21 and the second controller 22 to negotiate based on the voltage difference between the voltage of the first power 190 and the voltage of the second power 290. According to this, when a voltage difference occurs between the voltage of the first power 190 and the voltage of the second power 290, the CPU 91 negotiates through the first controller 21 and the second controller 22. Therefore, even when a voltage difference occurs between the voltage of the first power 190 and the voltage of the second power 290, the printer 1A adjusts the voltage difference, so the first power 190 and the second power 290 are stably supplied in parallel to the functional portion 60.

The printer 1A further includes the second power supply circuit 49 that supplies the first power 190 received from the first USB port 11 to the second USB port 12. According to this, the second power supply circuit 49 supplies the first power 190 to the second USB port 12. Because the second USB port 12 is connected to the second power supply 201 via a connection compliant with USB PD standards, the printer 1A can supply power to the second power supply 201 with power reception compliant with USB PD standards.

In the printer 1A, the functional portion 60 includes the print portion 13. The print portion 13 performs printing on the medium. The second power supply circuit 49 includes the switch 87 to switch between the supplying and stopping the supply of the first power 190 to the second USB port 12. When the first supply circuit 70 supplies both the first power 190 and the second power 290 in parallel to the print portion 13, the switch 87 stops the supply of power to the second USB port 12. According to this, the printing on a medium by the print portion 13 is among the most power-consuming functions executed by the printer 1A. When the first supply circuit 70 supplies both the first power 190 and the second power 290 in parallel to the print portion 13 for the purpose of printing on a medium, the supply of power to the second power supply 201 is stopped by the switch 87 stopping the supply of the power to the second USB port 12. Because the second power 290 is directly supplied to the print portion 13 in parallel with the first power 190, the printer 1A can stably print with the print portion 13.

In the printer 1A, when the first controller 21 and the first power supply 101 perform renegotiation, the switch 87 stops the supply of power to the second USB port 12. After stopping the power supply to the second USB port 12, the first controller 21 initiates renegotiation with the first power supply 101. According to this, when a negotiation request is received from the first power supply 101 while power is being supplied to the second power supply 201, the supply of power to the second power supply 201 is stopped, resulting in both the first power 190 and the second power 290 being supplied in parallel to the functional portion 60. In this state, the first controller 21 negotiates with the first power supply 101, so at least the second power 290 is supplied to the functional portion 60. Therefore, the printer 1A can inhibit insufficient power from being supplied to the functional portion 60 even when a negotiation request is received from the first power supply 101 while power is being supplied to the second power supply 201.

The printer 1A includes the display portion 17. The display portion 17 displays the functions of the printer 1A that can be executed with the total power of the first power 190 and the second power 290. According to this, the user can identify the functions of the printer 1A that can be executed with the total power of the first power 190 and the second power 290, among the plurality of functions of the printer 1A, by checking the display portion 17.

In the printer 1A, the display portion 17 includes the power supply indicator LED 16. The power supply indicator LED 16 is composed of three LEDs. The three LEDs emit green light, for example. The power supply indicator LED 16 indicates, by the number of LEDs lit, the functions of printer 1A that can be executed with the total power of the first power 190 and the second power 290. According to this, the user can easily identify, by checking the number of LEDs lit, which functions among the plurality of functions of the printer 1A can be executed with the total power of the first power 190 and the second power 290.

In the printer 1A, the display portion 17 includes the function indicator LED 15. The function indicator LED 15 indicates, by the color emitted by the LEDs 151, 152, and 153, the functions of the printer 1A that can be executed with the total power of the first power 190 and the second power 290. According to this, the user can easily identify, by checking the color emitted by the LEDs 151, 152, and 153, the functions that can be executed with the total power of the received first power 190 and second power 290 among the plurality of functions.

The printer 1A includes the operation portion 18. The operation portion 18 accepts the selection operations for the functions that the user wishes to execute on the functional portion 60. According to this, the printer 1A can execute a desired function from among a plurality of functions by the user performing a selection operation on the operation portion 18.

The printer 1A does not have a battery that stores received power and supplies it to the functional portion 60. According to this, the printer 1A supplies the first power 190 and the second power 290 in parallel to the functional portion 60. Even if the connection with either the first power supply 101 or the second power supply 201 were to be momentarily interrupted, the printer 1A can still supply the power received from the other of the first power supply 101 or the second power supply 201 to the functional portion 60, so supplying power to the functional portion 60 from a battery is unnecessary. Therefore, the printer 1A can inhibit the housing 2 from becoming larger due to incorporating a battery.

### Altered examples

The present invention may be modified in various ways from the foregoing embodiment. The various modified examples described below can be combined as long as no contradictions arise, and can, of course, also be suitably applied to other embodiments as long as no contradictions arise.

In the above embodiment, the user selected a function from a plurality of functions of the printer 1A using the operation portion 18, and the functional portion 60 executed the selected function. In contrast, the CPU 91 may select and execute a function from the plurality of functions of the printer 1A based on the total power of the first power 190 and the second power 290. According to this, because the CPU 91 controls the execution of the function based on the total power of the first power 190 and the second power 290, the printer 1A can execute the function in accordance with the total power of the first power 190 and the second power 290 without requiring user intervention. In this case, the processing in steps S7, S8, S26, and S27 in the main processing may be omitted. The printer 1A need not have the operation portion 18.

The first USB port 11 only needs to be connected to the first power supply 101 via a connection compliant with USB standards, and it need not be connected to the first power supply 101 via a connection compliant with USB PD standards. The first USB port 11 may be connected to the first power supply 101 using another standard, as long as the first controller 21 can determine the first power 190 through negotiation with the first power supply 101. The number and configuration of the first power supply 101 may be modified as appropriate.

The second USB port 12 may be connected to the second power supply 201 via a connection compliant with USB standards and does not necessarily need to be connected to the second power supply 201 in compliance with USB PD standards. Furthermore, the second USB port 12 may be connected to the second power supply 201 via another standard, as long as the second controller 22 can determine the second power 290 through negotiation with the second power supply 201. The number and configuration of the second power supply 201 may be modified as appropriate.

The first power supply circuit 70 may connect the first USB port 11 and the second USB port 12 in parallel to the functional portion 60, and its configuration may be changed as appropriate. The first power supply circuit 70 need not include the switches 81 to 86, for example.

The printer 1A need not include the first transformer 31A. The first transformer 31A may boost the voltage of the first power 190 and not step down the voltage of the first power 190. The printer 1A need not include the second transformer 32A. The second transformer 32A may boost the voltage of the second power 290 and not step down the voltage of the second power 290.

The voltage difference adjustment portion 40A need not include the adjustment circuit 30. The configuration of the adjustment circuit 30 may be modified as appropriate. The adjustment circuit 30 may transform the voltage of first power 190 via the first transformer 31A, and need not transform the voltage of second power 290 via the second transformer 32A. The adjustment circuit 30 may transform the voltage of second power 290 via the second transformer 32A, and need not transform the voltage of first power 190 via the first transformer 31A. The adjustment circuit 30 need not communicate with the CPU 91. That is to say, the adjustment circuit 30 may transform the voltage of the first power 190 using the first transformer 31A and transform the voltage of the second power 290 using the second transformer 32A without relying on the control of the CPU 91.

The voltage difference adjustment portion 40A need not include the first controller 21. In this case, the second controller 22 may negotiate not only with the second power supply 201, but also with the first power supply 101. By negotiating with the first power supply 101 and the second power supply 201 using the second controller 22, the voltage difference adjustment portion 40A can adjust the voltage difference between the voltage of the first power 190 and the voltage of the second power 290. The voltage difference adjustment portion 40A need not include the second controller 22. In this case, the voltage difference adjustment portion 40A may negotiate not only with the first power supply 101, but also with the second power supply 201 using the first controller 21. By negotiating with the first power supply 101 and the second power supply 201 using the first controller 21, the voltage difference adjustment portion 40A can adjust the voltage difference between the voltage of the first power 190 and the voltage of the second power 290. The CPU 91 need not negotiate with the first power supply 101 using the first controller 21 based on the voltage difference between the voltage of the first power 190 and the voltage of the second power 290. The CPU 91 need not negotiate with the second power supply 201 using the second controller 22 based on the voltage difference between the voltage of the first power 190 and the voltage of the second power 290. The CPU 91 may negotiate using the first controller 21 and need not negotiate using the second controller 22. The CPU 91 may negotiate using the second controller 22 and need not negotiate using the first controller 21. The voltage difference adjustment portion 40A may allow the first controller 21 and the second controller 22 to negotiate independently of the control by the CPU 91.

The printer 1A need not include the second power supply circuit 49. The configuration of the second power supply circuit 49 may be modified as appropriate. The second power supply circuit 49 may supply the second power 290 to the first USB port 11. The second power supply circuit 49 need not include the switch 87. When performing printing with the print portion 13, the printer 1A need not stop supplying power to the second power supply 201. When the printer 1A receives a request for renegotiation from the first power supply 101, the printer 1A need not stop the supply of power to the second power supply 201.

In the printer 1A, the display mode of the display portion 17 may be appropriately modified. The display portion 17 may include, for example, the liquid crystal display 19. In this case, the display portion 17 may display, with an image displayed by the liquid crystal display 19, the functions of the printer 1A that can be executed according to the total power of the first power 190 and the second power 290. The display portion 17 need not include the power supply indicator LED 16. The power supply indicator LED 16 need not change the number of LEDs that light up according to the executable functions of the printer 1A. The power supply indicator LED 16 may change the number of LEDs as appropriate. The display portion 17 need not include the function indicator LED 15. The LEDs 151, 152, and 153 need not change the colors emitted according to the executable functions of the printer 1A. The LEDs 151, 152, and 153 may be composed as a plurality of monochromatic LEDs integrated together and are not limited to full-color LEDs. The colors emitted by the LEDs 151, 152, and 153 may be changed as appropriate.

The printer 1A may include a DC connector for receiving power through a connection not compliant with USB standards. The printer 1A may include a battery for storing received power and supplying the stored power to the functional portion 60.

The configuration of the printer 1A may be appropriately modified as appropriate. For example, the printer 1A need not include the transport portion 14. The configuration of the functional portion 60 may also be modified as appropriate. For example, the functional portion 60 may include a power-driven cutter to cut the medium.

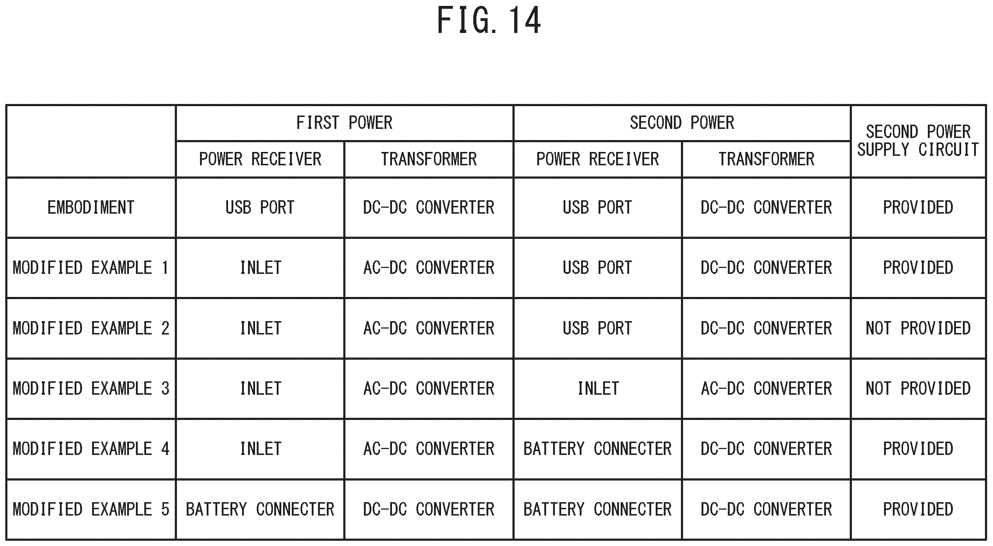

As shown in FIG. 14, the configuration for receiving the first power 190, the configuration for transforming the voltage of the first power 190, the configuration for receiving the second power 290, and the configuration for transforming the voltage of the second power 290 may be modified as appropriate.

### Modified example 1

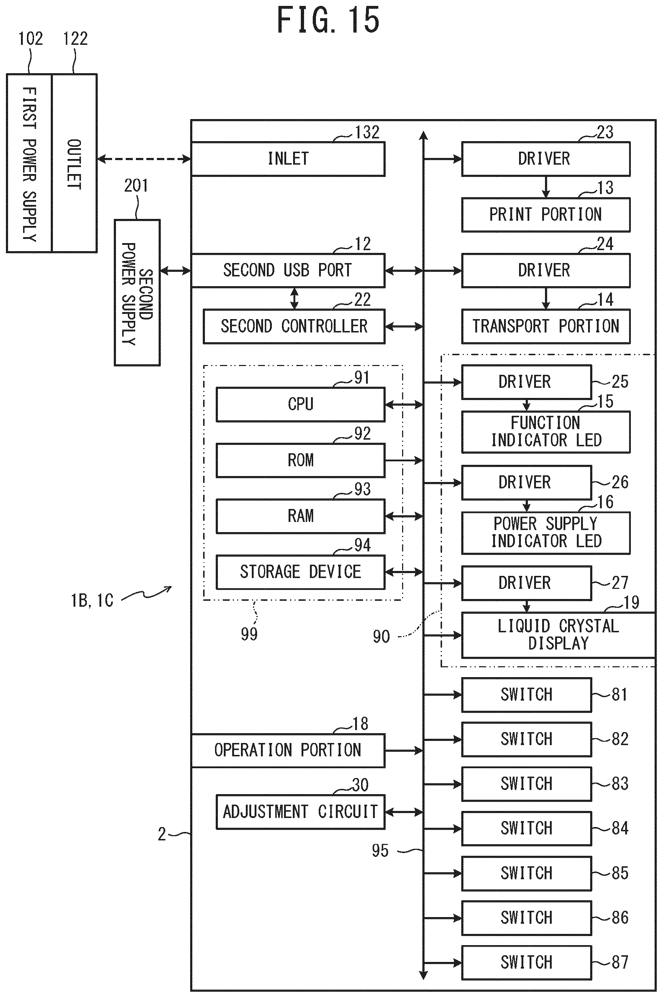

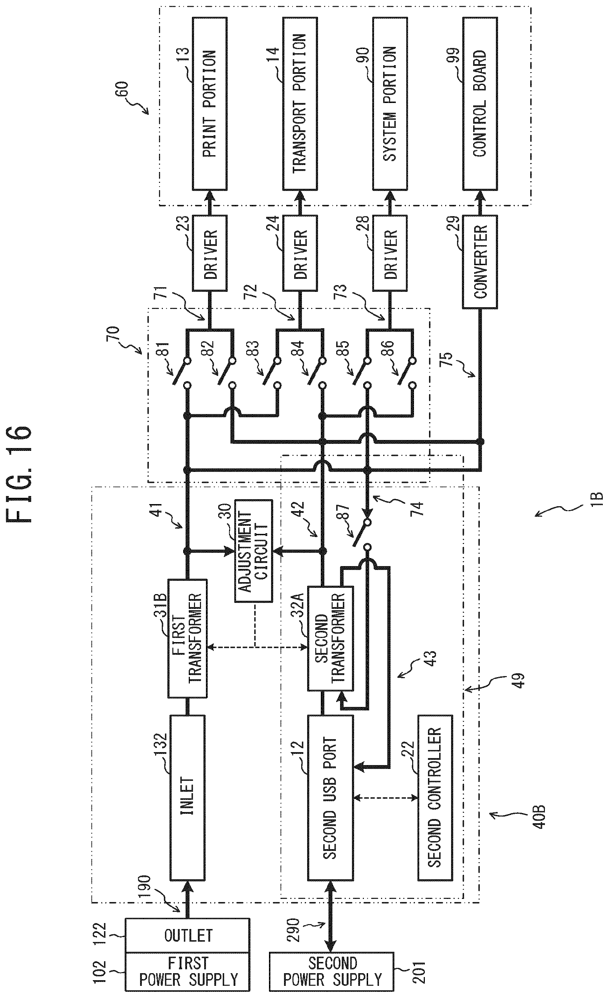

A printer 1B according to a modified example 1 will now be described with reference to FIGS. 15 and 16. The printer 1B differs from the printer 1A in that it receives the first power 190 through an inlet 132, which will be described later, and transforms the voltage of the first power 190 with a first transformer 31B.

The printer 1B includes an outlet 122, a power cable, not shown in the drawings, the inlet 132, and a voltage difference adjustment portion 40B. The outlet 122 is located outside the housing 2. The outlet 122 can be connected to the first power supply 102. The first power supply 102 is, for example, a commercial power supply, an AC output generator, an AC inverter, and outputs the first power 190. In the modified example 1, the first power 190 is AC power.

One end of the power cable is connected to the outlet 122. The other end of the power cable is connected to the inlet 132. The power cable supplies the first power 190 output from the first power supply 102 to the inlet 132.

The inlet 132 is located inside the housing 2. The inlet 132 receives the first power 190 and supplies it to the first transformer 31B.

The first transformer 31B is provided instead of the first transformer 31A, and is an AC-DC converter, for example. One end of the first transformer 31B is connected to the inlet 132. The other end of the first transformer 31B is connected to the power line 41.

The voltage difference adjustment portion 40B includes the CPU 91, the second controller 22, and the adjustment circuit 30. The adjustment circuit 30 transforms the voltage of the first power 190 with the first transformer 31B, and transforms the voltage of the second power 290 with the second transformer 32A, based on the control of the CPU 91.

In the printer 1B according to the modified example 1, the inlet 132 receives the first power 190 from the first power supply 102. The first supply circuit 70 connects the inlet 132 and the second USB port 12 to the functional portion 60 in parallel. The voltage difference adjustment portion 40B adjusts the voltage difference between the voltage of the first power 190 and the voltage of the second power 290. Therefore, the printer 1B achieves the same effects as the printer 1A.

### Modified example 2

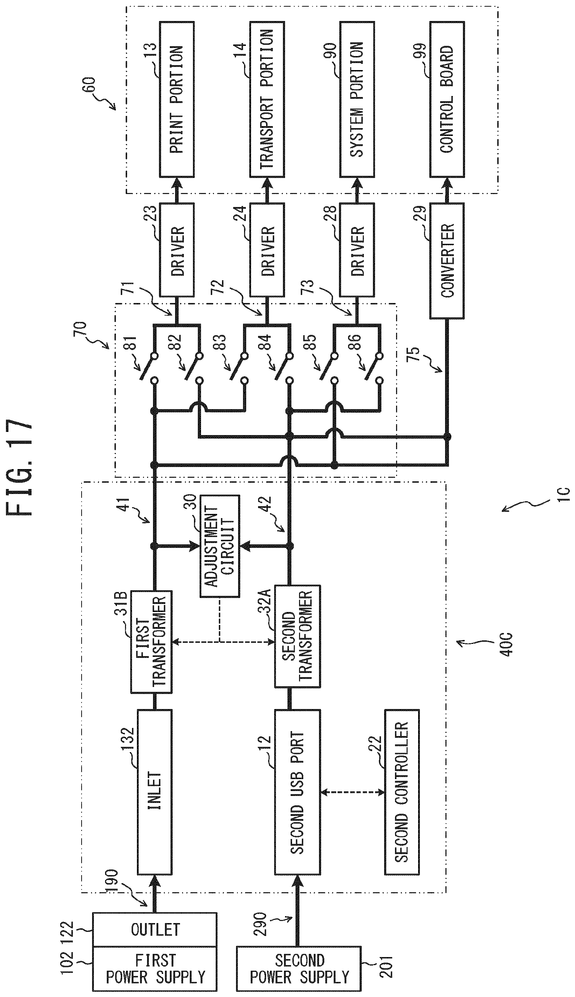

A printer 1C according to a modified example 2 will now be described with reference to FIGS. 15 and 17. The printer 1C differs from the printer 1B in that it does not include the second power supply circuit 49. The printer 1C is equipped with a voltage difference adjustment portion 40C. Like the voltage difference adjustment portion 40B, the voltage difference adjustment portion 40C includes the CPU 91, the second controller 22, and the adjustment circuit 30.

Because the printer 1C does not include the second power supply circuit 49, the second power supply 201 is always the source for the printer 1C, and the printer 1C is always the sink for the second power supply 201. The printer 1C achieves the same effects as the printer 1A.

### Modified example 3

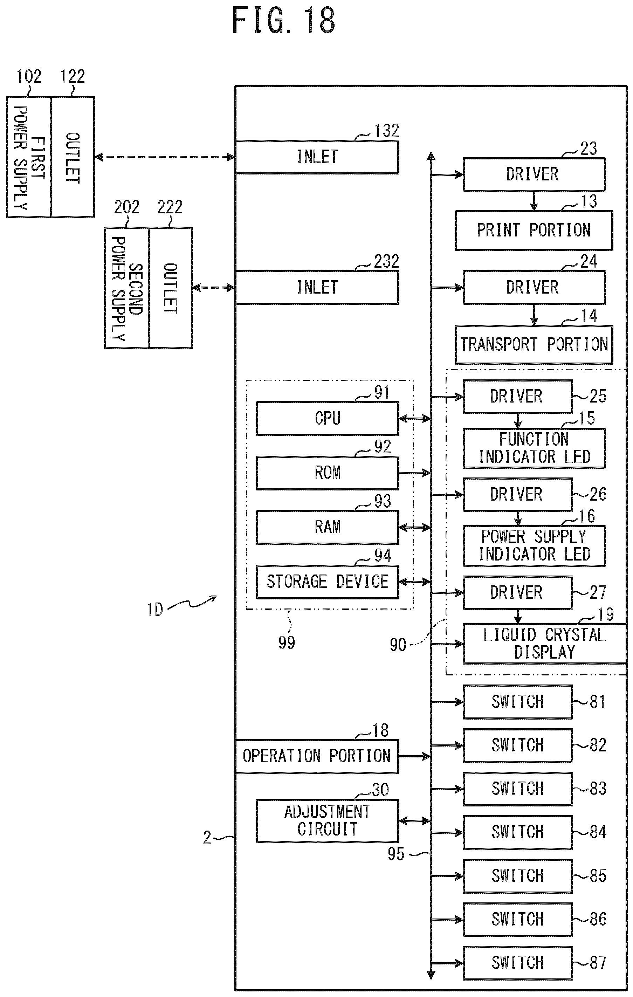

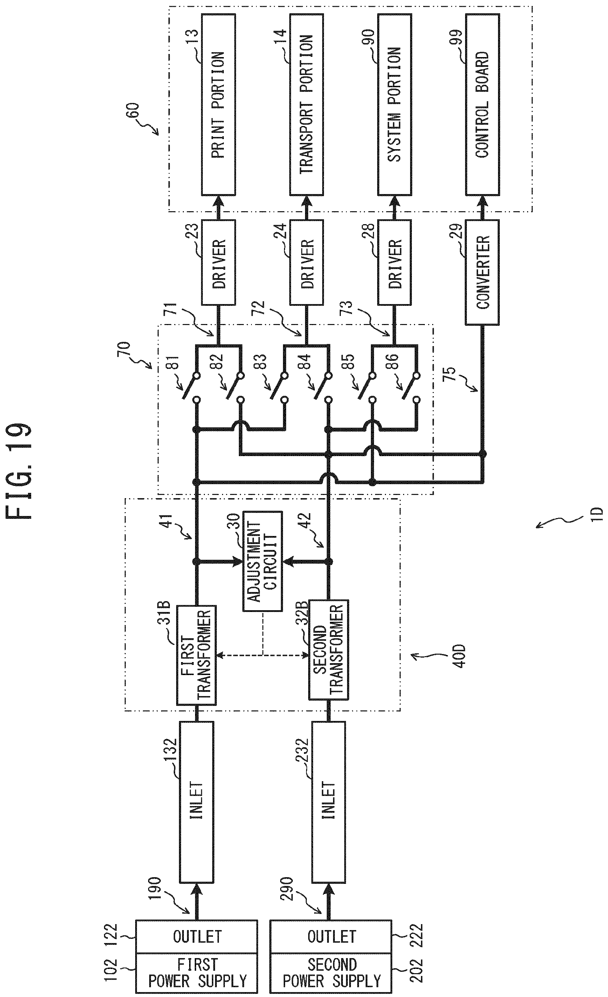

A printer 1D according to a modified example 3 will be described with reference to FIGS. 18 and 19. The printer 1D differs from the printer 1C in that it receives the second power 290 via an inlet 232, which will be described later, and transforms the voltage of the second power 290 with the second transformer 32B.

The printer 1D includes an outlet 222, a power cable, not shown in the drawings, the inlet 232, and a voltage difference adjustment portion 40D. The outlet 222 is located outside the housing 2. The outlet 222 can be connected to the second power supply 202. The second power supply 202 is, for example, a commercial power supply, an AC output generator, an AC inverter, and outputs the second power 290. In the modified example 3, the second power 290 is AC power.

One end of the power cable is connected to the outlet 222. The other end of the power cable is connected to the inlet 232. The power cable supplies the second power 290, which is output from the second power supply 202, to the inlet 232.

The inlet 232 is located inside the housing 2. The inlet 232 receives the second power 290 and supplies it to the second transformer 32B.

The second transformer 32B is provided instead of the second transformer 32A, and is an AC-DC converter, for example. One end of the second transformer 32B is connected to the inlet 232. The other end of the second transformer 32B is connected to the power line 42.

The voltage difference adjustment portion 40D includes the CPU 91 and the adjustment circuit 30. The adjustment circuit 30 transforms the voltage of the first power 190 with the first transformer 31B, and transforms the voltage of the second power 290 with the second transformer 32B, based on the control of the CPU 91.

In the printer 1D according to the modified example 3, the inlet 232 receives the second power 290 from the second power supply 202. The first supply circuit 70 connects the inlet 132 and the inlet 232 to the functional portion 60 in parallel. The voltage difference adjustment portion 40D adjusts the voltage difference between the voltage of the first power 190 and the voltage of the second power 290. Therefore, the printer 1D achieves the same effects as printer 1A.

### Modified example 4

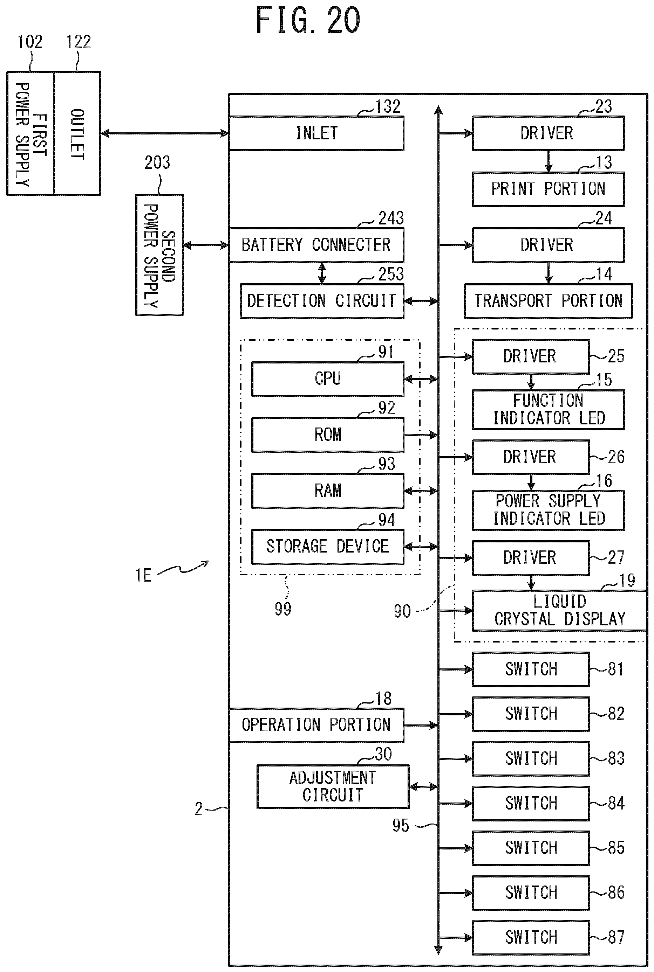

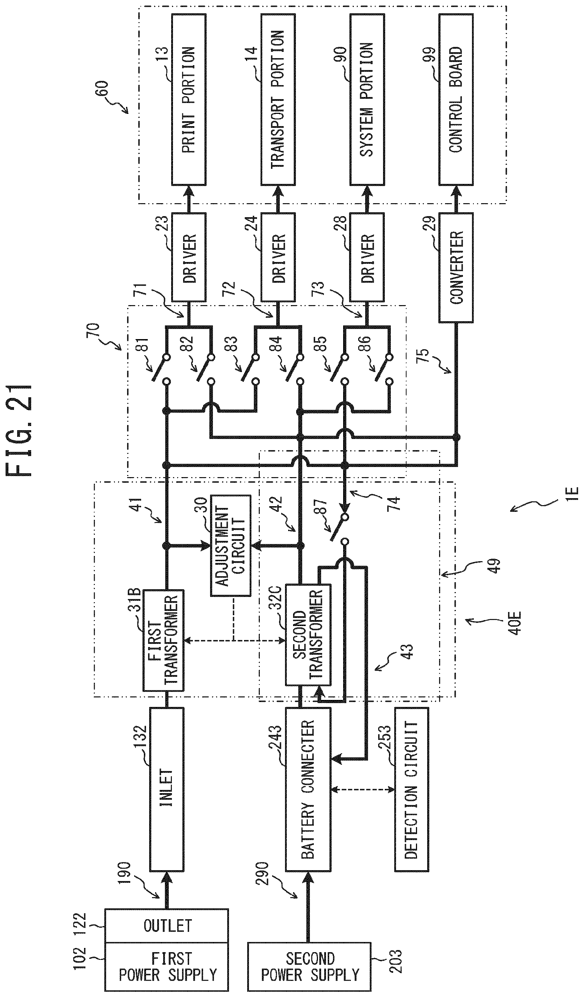

A printer 1E according to a modified example 4 will be described with reference to FIGS. 20 and 21. The printer 1E differs from the printer 1B in that it receives the second power 290 through a battery connector 243, which will be described later, and transforms the voltage of the second power 290 with the second transformer 32C.

The printer 1E includes the battery connector 243, a detection circuit 253, and a voltage difference adjustment portion 40E. The battery connector 243 is located inside the housing 2. The battery connector 243 can be connected to the second power supply 203 via a power cable, not shown in the drawings.

The second power supply 203 is, for example, a DC battery, a DC power supply, or a DC converter, and can output the second power 290. The second power supply 203 is configured to be able to charge and discharge. In the modified example 4, the second power 290 is DC power. When the battery connector 243 receives power from the second power supply 203, the battery connector 243 receives the second power 290 from the second power supply 203. When charging the second power supply 203, the battery connector 243 supplies power to the second power supply 203.

The detection circuit 253 detects the magnitude of the current of the second power 290 received by the battery connector 243 and outputs a signal indicating the magnitude of the current of the second power 290 to the CPU 91.

The second transformer 32C is provided instead of the second transformer 32A and is, for example, a DC-DC converter. One end of the second transformer 32C is connected to the battery connector 243. The other end of the second transformer 32C is connected to the power line 42.

The voltage difference adjustment portion 40E includes the CPU 91 and the adjustment circuit 30. The adjustment circuit 30 transforms the voltage of the first power 190 with the first transformer 31B, and transforms the voltage of the second power 290 with the second transformer 32C, based on the control of the CPU 91.

The CPU 91 determines, based on the signal output from the detection circuit 253, whether the magnitude of the current of the second power 290 received by the battery connector 243 is smaller than the threshold value. If the magnitude of the current of the second power 290 is smaller than the threshold value, the CPU 91 closes the switch 87 and supplies the first power 190 to the battery connector 243 via the second power supply circuit 49. The second power supply 203 is charged by power output from the battery connector 243.

In the printer 1E according to the modified example 4, the battery connector 243 receives the second power 290 from the second power supply 203. The first supply circuit 70 connects the inlet 132 and the battery connector 243 in parallel to the functional portion 60. The voltage difference adjustment portion 40E adjusts the voltage difference between the voltage of the first power 190 and the voltage of the second power 290. Therefore, the printer 1E achieves the same effects as the printer 1A.

### Modified example 5

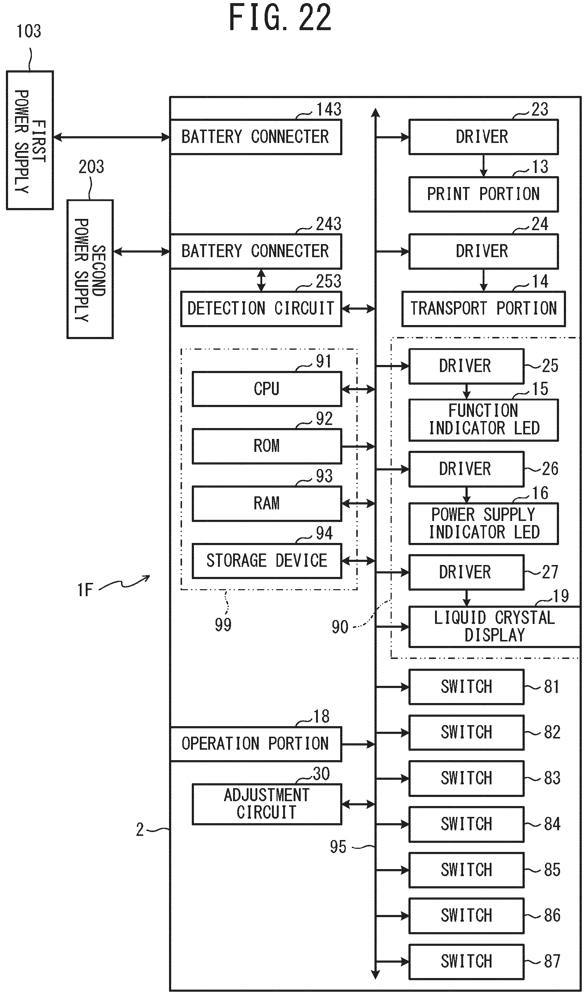

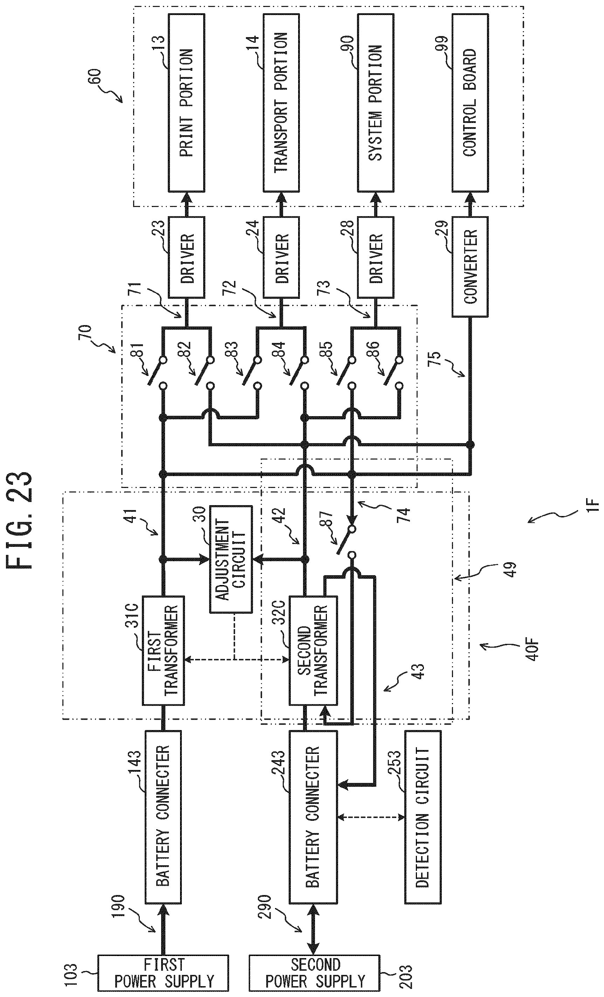

A printer 1F according to a modified example 5 will be described with reference to FIGS. 22 and 23. The printer 1F differs from the printer 1E in that it receives the first power 190 through a battery connector 143, which will be described later, and transforms the voltage of the second power 290 with the first transformer 31C.

The printer 1F includes the battery connector 143 and a voltage difference adjustment portion 40F. The battery connector 143 is located inside the housing 2. The battery connector 143 can be connected to a first power supply 103 via a power cable, not shown in the drawings.

The first power supply 103 is, for example, a DC battery, a DC power supply, a DC converter, and can output the first power 190. In the modified example 5, the first power 190 is DC power. The battery connector 143 receives the first power 190 from the first power supply 103.

The first transformer 31C is provided instead of the first transformer 31B, and is, for example, a DC-DC converter. One end of the first transformer 31C is connected to the battery connector 143. The other end of the first transformer 31C is connected to the power line 41.

The voltage difference adjustment portion 40F includes the CPU 91 and the adjustment circuit 30. The adjustment circuit 30 transforms the voltage of the first power 190 with the first transformer 31C, and transforms the voltage of the second power 290 with the second transformer 32C, based on the control of the CPU 91.

In the printer 1F according to the modified example 5, the battery connector 143 receives the first power 190 from the first power supply 103. The first supply circuit 70 connects the battery connector 143 and the battery connector 243 to the functional portion 60 in parallel. The voltage difference adjustment portion 40F adjusts the voltage difference between the voltage of the first power 190 and the voltage of the second power 290. Therefore, the printer 1F achieves the same effects as the printer 1A. Also, the printers 1E and 1F need not include the second power supply circuit 49. The printer 1F may further include a third supply circuit that supplies the second power 290 to the battery connector 143. In this case, the first power supply 103 is configured to be able to charge and discharge. When the printer 1F includes the third supply circuit, the printer 1F may further include a detection circuit that detects the magnitude of the current of the first power 190 received by the battery connector 243.

### Other

The first USB port 11, the inlet 132, and the battery connector 143 are examples of the "first power receiving portion" of the present invention. The second USB port 12, the inlet 232, and the battery connector 243 are examples of the "second power receiving portion" of the present invention. The CPU 91 is an example of the "unified controller" and the "function control portion" of the present invention. The switch 87 is an example of the "switch portion" of the present invention.

## Claims

1. A printer (1A;1B;1C;1D;1E;1F), comprising:
a first power receiving portion (11, 132, 143) configured to receive a first power (190) from a first power supply (101);
a second power receiving portion (12, 232, 243) configured to receive a second power (290) from a second power supply (201);
a functional portion (60) configured to execute a function of the printer (1A);
a first supply circuit (70) configured to connect the first power receiving portion (11, 132, 143) and the second power receiving portion (12, 232, 243) in parallel to the functional portion (60); and
a voltage difference adjustment portion (40A;40B;40C;40D;40E;40F) configured to adjust a voltage difference between a voltage of the first power supply (190) and a voltage of the second power supply (290) in the first supply circuit (70).

2. The printer (1A) according to claim 1, wherein
the first power receiving portion (11, 132, 143) is a first USB port (11) configured to receive the first power (190) from the first power supply (101) via a connection compliant with Universal Serial Bus (USB) standards, and
the second power receiving portion (12, 232, 243) is a second USB port (12) configured to receive the second power (290) from the second power supply (201) via a connection compliant with the USB standards.

3. The printer (1A) according to claim 2, further comprising
a first transformer (31A) connected to the first USB port (11), and configured to transform the voltage of the first power supply (190), and
a second transformer (32A) connected to the second USB port (12), and configured to transform the voltage of the second power supply (290),
wherein
the voltage difference adjustment portion (40A;40B;40C;40D;40E;40F) includes
an adjustment circuit (30) configured to perform one or both of transforming the voltage of the first power (190) with the first transformer (31A) and transforming the voltage of the second power (290) with the second transformer (32A), based on the voltage difference.

4. The printer (1A) according to claim 2, wherein
the first USB port (11) is connected to the first power supply (101) via a connection compliant with USB Power Delivery (USB PD) standards;
the second USB port (12) is connected to the second power supply (201) via a connection compliant with the USB PD standards; and
the voltage difference adjustment portion (40A) includes
a first controller (21) configured to negotiate a combination of the voltage and a current of the first power (190) with the first power supply (101),
a second controller (22) configured to negotiate a combination of the voltage and a current of the second power (290) with the second power supply (201), and
a unified controller (91) configured to perform one or both of causing the first controller (21) to negotiate with the first power supply (101), and causing the second controller (22) to negotiate with the second power supply (201), based on the voltage difference.

5. The printer (1A) according to claim 2, wherein
the second USB port (12) is connected to the second power supply (201) via a connection compliant with USB Power Delivery (USB PD) standards, and
the printer (1A) further includes
a second power supply circuit (49) configured to supply the first power (190) received from the first USB port (11) to the second USB port (12).

6. The printer (1A) according to claim 5, wherein
the functional portion (60) includes a print portion (13) configured to perform printing on a medium,
the second power supply circuit (49) includes a switch portion (87) configured to switch between supplying power and stopping the supply of power to the second USB port (12), and
the switch portion (87) stops supplying power to the second USB port (12) when the first supply circuit (70) supplies the first power (190) and the second power (290) in parallel to the print portion (13).

7. The printer (1A) according to claim 5, wherein
the first USB port (11) is connected to the first power supply (101) via a connection compliant with the USB PD standards, and
the printer (1A) further includes
a first controller (21) configured to negotiate the combination of the voltage and a current of the first power (190) with the first power supply (101),
wherein
the second power supply circuit (49) includes a switch portion (87) configured to switch between supplying power and stopping the supply of power to the second USB port (12), and
when a negotiation request is received from the first power supply (101) to the first controller (21), the switch portion (87) stops supplying power to the second USB port (12), and after the switch portion (87) has stopped supplying power to the second USB port (12), the first controller (21) starts negotiating with the first power supply (101).

8. The printer (1A;1B;1C;1D;1E;1F) according to claim 1, further comprising:
a display portion (17) configured to display the function, from among a plurality of the functions, which can be executed according to a total of the first power (190) and the second power (290).

9. The printer (1A;1B;1C;1D;1E;1F) according to claim 8, wherein
the display portion (17) includes a plurality of LEDs (Light Emitting Diodes) (16), and changes a number of LEDs (16) configured to illuminate according to the functions that can be executed.

10. The printer (1A;1B;1C;1D;1E;1F) according to claim 8, wherein
the display portion (17) includes an LED (15) configured to emit a plurality of colors, and changes the color emitted by the LED (15) according to the functions that can be executed.

11. The printer (1A;1B;1C;1D;1E;1F) according to claim 8, further comprising:
an operation portion (18) configured to receive a selection operation for the function executed by the functional portion (60) from the functions displayed on the display portion (17).

12. The printer (1A;1B;1C;1D;1E;1F) according to claim 1, further comprising:
a function control portion (91) configured to control the execution of the function based on a total of the first power (190) and the second power (290).

13. The printer (1A) according to claim 2, wherein
a battery configured to store received power and supplies the stored power to the functional portion (60) is not included.
